(19) Europäisches Patentamt / European Patent Office / Office européen des brevets

(11) **EP 3 252 193 B1**

(12) **EUROPEAN PATENT SPECIFICATION**

(45) Date of publication and mention
of the grant of the patent:
**26.12.2018 Bulletin 2018/52**

(21) Application number: **16793725.9**

(22) Date of filing: **30.06.2016**

(51) Int Cl.:
*D01F 9/14* (2006.01)     *H01M 4/133* (2010.01)
*H01M 4/587* (2010.01)    *D01D 5/00* (2006.01)
*D01D 1/02* (2006.01)     *D01F 9/21* (2006.01)
*D01F 1/02* (2006.01)

(86) International application number:
**PCT/JP2016/069494**

(87) International publication number:
**WO 2017/175401 (12.10.2017 Gazette 2017/41)**

(54) **CARBON FIBER, CARBON FIBER MATERIAL PRODUCTION METHOD, ELECTRICAL DEVICE, RECHARGEABLE BATTERY, AND PRODUCT**

KOHLENSTOFFFASER, VERFAHREN ZUR HERSTELLUNG EINES KOHLENSTOFFFASERMATERIALS, AKKU UND PRODUKT

FIBRES DE CARBONE, PROCÉDÉ DE FABRICATION DE MATÉRIAU EN FIBRES DE CARBONE, DISPOSITIF ÉLECTRIQUE, BATTERIE SECONDAIRE, ET ARTICLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2016 JP 2016060987**

(43) Date of publication of application:
**06.12.2017 Bulletin 2017/49**

(73) Proprietor: **Tec One Co., Ltd.
Ishikawa
929-0124 (JP)**

(72) Inventor: **KITANO Takahiro
Nomi-shi
Ishikawa 929-0124 (JP)**

(74) Representative: **Vossius & Partner
Patentanwälte Rechtsanwälte mbB
Siebertstrasse 3
81675 München (DE)**

(56) References cited:
WO-A1-2006/054636     WO-A1-2013/157160
WO-A1-2014/160174

**Description**

[TECHNICAL FIELD]

The present invention relates to a technology of carbon fiber.

[BACKGROUND ART]

A carbon fiber is employed in various fields. For example, a carbon fiber is employed for a secondary battery (lithium-ion battery, etc.). In the secondary battery, a carbon fiber serves as, for example, a conductive assistant.

The below mentioned carbon fiber is proposed (Patent No. 4697901: Patent Literature 1). The carbon fiber includes a large-diameter portion and a small-diameter portion. A diameter of the large-diameter portion is of a range between 20 nm and 2 μm. A diameter of the small-diameter portion is of a range between 10 nm and 1 μm. (diameter of the large-diameter portion) > (diameter of the small-diameter portion). The Patent Literature 1 proposes the following producing method. The method includes a dispersion liquid preparation step, an electrospinning step, and a denaturation step. The method includes an unraveling step, if required. The dispersion liquid preparation step is a step of producing a dispersion liquid that contains pitch and resin. The electrospinning step is a step of performing electrospinning of the dispersion liquid. A nonwoven fabric (nonwoven fabric formed of a carbon fiber precursor) is manufactured by the step. The denaturation step is a step of modifying the carbon fiber precursor (nonwoven fabric) to a carbon fiber. The unraveling step is a step of unraveling the nonwoven fabric (made of carbon fiber) after it is subjected to the denaturation step.

A technology in which centrifugal spinning is employed, instead of the electrospinning, is also proposed (Patent No. 5334278: Patent Literature 2).

A technology in which wet spinning (or dry spinning) is employed, instead of the electrospinning, is also proposed (Patent No. 5510970: Patent Literature 3).

The below mentioned negative-electrode active material is proposed (Patent No. 5376530: Patent Literature 4). The negative-electrode active material includes a carbon fiber and a material capable of forming an alloy with lithium. The material is provided on a surface of the carbon fiber. The negative-electrode active material is subjected to occluding/desorbing processing of lithium ion before it is installed into a battery. Patent literature 5 (WO 2014/160174 A1) describes a process for preparing a nanofiber, the process comprises providing a fluid stock comprising a polymer and a nanostructured carbon or nanostructured carbon precursor and electrospinning the fluid stock, producing a spun nanofiber.

[CITATION LIST]

[PATENT LITERATURE]

[PATENT LITERATURE 1] JP No. 4697901

[PATENT LITERATURE 2] JPNo. 5334278

[PATENT LITERATURE 3] JP No. 5510970

[PATENT LITERATURE 4] JP No. 5376530

[PATENT LITERATURE 5] WO 2014/160174 A1

[SUMMARRY OF INVENTION]

[TECHNICAL PROBLEM]

The carbon fibers disclosed in the Patent Literatures 1 and 2 have a large-diameter portion and a small-diameter portion. The carbon fibers have a surface area larger than a carbon fiber having a single diameter. It comes to be known that, in a case where a carbon fiber having the above described feature (having a large-diameter portion and a small-diameter portion) is used as a conductive assistant, contact resistance between fibers is large. It also comes to be known that contact resistance between a fiber and an active material is large. It was difficult to largely improve rate characteristics of a battery.

A higher capacity of a battery is demanded in a field of lithium-ion battery. A silicon (Si) based active material is drawing attention as a negative-electrode material. A sulfur (S) based active material is drawing attention as a positive-electrode material. The silicon (Si) based active material and the sulfur (S) based active material are not conductive. Therefore, a conductive assistant is required. The active material has a defect of large volume change which is resulted from charging and discharging. Therefore, repetition of charging and discharging causes separation of active material from conductive assistant. As a result, a discharge capacity decreases.

In order to solve the problem, a combination of a silicon based negative-electrode active material and a carbon fiber was studied. For example, metal silicon was provided on a carbon fiber (nonwoven fabric) by means of spattering (Patent Literature 2). This technology was more excellent than the method in which a metal silicon was provided on an electrode, except that a discharge capacity (300 mA/g) is low against a charge capacity (667 mA/g). A technology in which metal silicon is provided on a surface of a carbon fiber by means of electrochemical treatment is proposed (Patent Literature 4). This technology has good cycle characteristics. On the other hand, a discharge capacity (200 mA/g) is low.

A first solution that the present invention proposes is to provide a carbon fiber having low contact resistance and high conductivity.

A second solution that the present invention proposes is to provide a carbon fiber suitable as an electrode material.

[SOLUTION TO PROBLEM]

The present invention proposes a carbon fiber,
wherein the following [Requirement 1] to [Requirement 4] are satisfied.

[Requirement 1]

> Diameter of the carbon fiber:    0.5-6.5 $\mu$m
> Length of the carbon fiber:    5-65 $\mu$m

(diameter of the carbon fiber) < (length of the carbon fiber)

[Requirement 2]

The carbon fiber has "waviness".

[Requirement 3]

The carbon fiber has protruding portions.

> Protruding height of the protruding portions: 20-300 nm
> Number of the protruding portions: 3-25 per 1 $\mu$m length (a length along the carbon fiber) of the carbon fiber

[Requirement 4]

The carbon fiber contains carbon black.

Preferably, the present invention proposes a carbon fiber
wherein the above mentioned [Requirement 1] to [Requirement 4], and the below mentioned [Requirement 5] are satisfied.

[Requirement 5]

The carbon fiber contains Si particles.

$$[\text{mass of the Si particles}]/[\text{mass of the carbon black} + \text{mass of the Si particles}] = 20\text{-}94\%$$

Preferably, the present invention proposes a carbon fiber

wherein the above mentioned [Requirement 1] to [Requirement 4], and the below mentioned [Requirement 6] are satisfied.

[Requirement 6]

The carbon fiber contains S particles.

$$[\text{mass of the S particles}]/[\text{mass of the carbon black} + \text{mass of the S particles}] = 20\text{-}94\%$$

The present invention proposes a product containing a carbon fiber, wherein the carbon fiber is the above described carbon fiber.

The present invention proposes an electrical device with the carbon fiber.

The present invention proposes a secondary battery having a negative electrode which is made of the carbon fiber.

The present invention proposes a secondary battery having a positive electrode which is made of the carbon fiber.

The present invention proposes a method of producing a carbon fiber material, wherein the method includes a dispersion liquid preparation step, a spinning step, and a denaturation step:

wherein the dispersion liquid preparation step is a step of preparing dispersion liquid which contains polyvinyl alcohol, carbon black (having a primary particle diameter of 21-69 nm), and a solvent;
wherein the spinning step is a step of producing a fiber material (containing a carbon fiber precursor) from the dispersion liquid; and
wherein the denaturation step is a step of modifying the carbon fiber precursor to a carbon fiber.

The present invention proposes the method of producing a carbon fiber material, wherein the carbon black is contained, preferably, by 5-200 mass pts. with respect to 100 mass pts. of the polyvinyl alcohol.

The present invention proposes the method of producing a carbon fiber material, wherein the polyvinyl alcohol preferably has a degree of polymerization of a range between 2200 and 4000 and a degree of saponification of a range between 75 and 90 mol%.

The present invention proposes the method of producing a carbon fiber material, which preferably further includes an unraveling step and a classifying step, wherein the unraveling step is a step of unraveling the fiber material, and wherein the classifying step is a step of separating carbon fibers (having a diameter of 0.5-6.5 $\mu$m and a length of 5-65 $\mu$m).

The present invention proposes the method of producing a carbon fiber material, wherein the dispersion liquid preparation step preferably is a step of producing dispersion liquid by additionally using Si particles (or S particles), wherein the Si particles (or S particles) has a particle diameter of a range between 0.05 and 3 $\mu$m, and wherein [mass of the Si particles (or S particles)/[mass of the carbon black + mass of the Si particles (or S particles)] = 20-94% is satisfied.

The present invention proposes the method of producing a carbon fiber material, wherein the spinning is, for example, spinning and drawing.

The present invention proposes the method of producing a carbon fiber material, wherein the spinning is, for example, centrifugal spinning.

The present invention proposes the method of producing a carbon fiber material, wherein the spinning is, for example, electrospinning.

[ADVANTAGEOUS EFFECT OF INVENTION]

A carbon fiber having low contact resistance and high conductivity could be obtained.

When the carbon fiber of the present invention was employed as a negative-electrode active material of a lithium-ion battery, deviation between Si (silicon) particles and carbon fiber (conductive assistant) could be suppressed.

When the carbon fiber of the present invention was employed as a positive electrode active material of a lithium-ion battery, deviation between S (sulfur) particles and carbon fiber (conductive assistant) could be suppressed.

An electrode material excellent in durability (characteristics of repetitive charging and discharging: cycle characteristics) could be obtained.

[BRIEF DESCRIPTION OF DRAWINGS]

FIG. 1 is a schematic side surface view of a centrifugal spinning machine.
FIG. 2 is a schematic plane view of the centrifugal spinning machine.
FIG. 3 is a schematic drawing of a spinning-and-drawing machine.
FIG. 4 is a schematic diagram of a carbon fiber.
FIG. 5 is a SEM image.
FIG. 6 is a SEM image.
FIG. 7 is a diagram illustrating discharge characteristics.
FIG. 8 is a SEM image.
FIG. 9 is a SEM image.
FIG. 10 is a SEM image.
FIG. 11 is a SEM image.
FIG. 12 is a diagram illustrating X-ray diffraction.
FIG. 13 is a diagram illustrating discharge characteristics.
FIG. 14 is a SEM image.
FIG. 15 is a SEM image.
FIG. 16 is a diagram illustrating discharge characteristics.
FIG. 17 is a TEM image.
FIG. 18 includes a SEM image, a carbon mapping, and a silicon mapping.

[Description of Embodiments]

A first invention is a carbon fiber. The carbon fiber satisfies the below mentioned [Requirement 1] to [Requirement 4]. Preferably, the carbon fiber further satisfies the below mentioned [Requirement 5] (or [Requirement 6]).

[Requirement 1]

Diameter of the carbon fiber: 0.5-6.5 $\mu$m
Length of the carbon fiber: 5-65 $\mu$m

(diameter of the carbon fiber) < (length of the carbon fiber)

[Requirement 2]

The carbon fiber has "waviness".

[Requirement 3]

The carbon fiber has protruding portions.
Protruding height of the protruding portions: 20-300 nm
Number of the protruding portions: 3-25 per 1 $\mu$m length (length along the carbon fiber) of the carbon fiber

[Requirement 4]

The carbon fiber contains carbon black.

[Requirement 5]

The carbon fiber contains Si particles.

$$[\text{mass of the Si particles}]/[\text{mass of the carbon black} + \text{mass of the Si particles}] =$$

20-94%

[Requirement 6]

The carbon fiber contains S particles.

$$\text{[mass of the S particles]/[mass of the carbon black + mass of the S particles] =}$$

20-94%

When the carbon fiber contains the Si particles, a capacity as a lithium-ion battery negative-electrode material increases.

When the carbon fiber contains the S particles, a capacity as a lithium-ion battery positive-electrode material increases.

The Si particles (the S particles) are not conductive. The carbon fiber contains carbon black (carbon black having conductivity). This makes the carbon fiber conductive. The carbon fiber becomes an active material having a large capacity. The carbon fiber has a fiber shape, which allows easy retaining of conductivity with surrounding materials in comparison with a case where the carbon fiber has a ball shape. With the shape, cycle characteristics hardly degrade even when a large volume change occurs according to charging and discharging.

A second invention is a method of producing a carbon fiber material. In the present invention, "fiber material" means, for example, "a sheet or a film made of fibers (e.g., nonwoven fabric)", "yarns", and "fibers (e.g., long fibers or short fibers)". The "fiber material" includes fiber products other than the above described products. The "carbon fiber material" includes cases of (1) a nonwoven fabric (i.e., A fiber composing the nonwoven fabric is a carbon fiber); (2) a yarn; (3) a fiber (The fiber is a carbon fiber. The fiber is a long fiber or a short fiber.); and (4) other products (A fiber composing the product is a carbon fiber). The present method includes a dispersion liquid preparation step, a spinning step, and a denaturation step. Preferably, the present method further includes an unraveling step. Preferably, the present method still further includes a classifying step.

The dispersion liquid (the dispersion liquid obtained in the dispersion liquid preparation step) contains carbon black (hereinafter shortly referred to as CB). The dispersion liquid contains polyvinyl alcohol (hereinafter shortly referred to as PVA). The dispersion liquid contains a solvent. Preferably, the dispersion liquid contains Si particles. Preferably, the dispersion liquid contains S particles.

A primary particle diameter of the CB (a particle diameter of CB particles in a dispersion state) was 21-69 nm, preferably, less than 69 nm, more preferably, 60 nm or less, further preferably, 55 nm or less.

The primary particle diameter (average primary particle diameter) can be obtained by, for example, a specific surface area measuring method (gas absorption method). The primary particle diameter can be obtained also by a transmission electron microscope (TEM) or an X-ray scattering technique. In the present invention, the primary particle diameter (average primary particle diameter) was obtained by TEM.

In a case where CB having the above described particle diameter was employed, a carbon fiber having a large specific surface area could be obtained. For example, in comparison with a case where mesophase pitch is employed, a carbon fiber having a larger specific surface area could be obtained. The large specific surface area involves a large contact area between carbon fiber and active material. This decreases contact resistance. An electrode having low internal resistance was obtained. This enables high speed charging and discharging.

Concentration of CB in the dispersion liquid was, preferably, 20-200 g/L, more preferably, 30 g/L or more, further preferably, 100 g/L or less. In a case where the dispersion liquid contains Si particles or S particles, an amount of CB not more than the above described amount was sufficient. For example, 20 g/L or less amount of CB was enough. In other words, in a case where Si particles or S particles are contained, preferable concentration of CB was 1-100 g/L.

A mean molecular weight (degree of polymerization) of the PVA was, preferably, 2200-4000, more preferably, 3000 or less.

The degree of polymerization was measured according to JIS K 6726. For example, 1 pts. of PVA was dissolved in 100 pts. of water. Viscosity (30 °C) was obtained by using Ostwald viscometer (relative viscometer). A degree of polymerization ($P_A$) was obtained based on the following equations (1) to (3).

$$\text{Log } (P_A) = 1.613 \times \log\{([\eta] \times 10^4)/8.29\} \qquad (1)$$

$$[\eta] = \{2.303 \times \log [\eta_{rel}]\}/C \qquad (2)$$

$$[\eta_{rel}] = t_1/t_0 \qquad (3)$$

$P_A$: degree of polymerization, $[\eta]$: limiting viscosity, $\eta_{rel}$: relative viscosity, C: concentration (g/L) of test solution, $t_0$: dropping time (s) of water, $t_1$: dropping time (s) of test solution

A degree of saponification of the PVA was, preferably, 75-90 mol%, more preferably, 80 mol% or more.

The degree of saponification was measured according to JIS K 6726. For example, according to an estimated degree of saponification, 1-3 pts. of sample, 100 pts. of water, and three drops of phenolphthalein solution were added and dissolved completely. 25 ml of NaOH solution (0.5 mol/L) was added, stirred, and left for two hours. 25 ml of HCl solution (0.5 mol/L) was added. Titration was performed with NaOH solution (0.5 mol/L). The degree of saponification (H) was obtained by the following equations (1) to (3).

$$X_1 = \{(a\text{-}b) \times f \times D \times 0.06005\}/\{S \times (P/100)\} \times 100 \quad (1)$$

$$X_2 = (44.05 \times X_1)/(60.05 - 0.42 \times X_1) \qquad (2)$$

$$H = 100 - X_2 \qquad (3)$$

$X_1$: amount of acetic acid corresponding to residual acetic group (%)
$X_2$: residual acetic group (mol%)
H: degree of saponification (mol%)
a: amount of use (ml) of NaOH solution (0.5 mol/1)
b: amount of use (ml) of NaOH solution (0.5 mol/1) in blank test
f: factor of NaOH solution (0.5 mol/l)
D: concentration (0.1 mol/l or 0.5 mol/1) of normal solution
S: collection quantity (g) of sample
P: fineness (%) of sample

Concentration of the PVA in the dispersion liquid was, preferably, 50-200 g/L, more preferably, 60 g/L or more, further preferably, 150 g/L or less.

The CB was, preferably 5-200 mass pts., more preferably, 10 mass pts. or more, further preferably, 100 mass pts. or less with respect to 100 mass pts. of the PVA.

Preferably, the solvent was one or a combination of two or more (mixture) solvent selected from a group consisting of water and alcohol. As a matter of course, other solvents can be employed. From an environmental perspective, water or alcohol was preferred. Water was most preferred. Even when water is employed, use of water together with other solvent is not prohibited. Use of 30 mass% or less would not invite a serious problem.

A particle diameter of the Si particles was, preferably, 0.05-3 $\mu$m, more preferably, 0.1 $\mu$m or more, further preferably, 0.2 $\mu$m or more, further preferably, 0.25 $\mu$m or more, further preferably, 0.3 $\mu$m or more, still further preferably, 2.5 $\mu$m or less. The particle diameter was obtained by means of a scanning electron microscopes/energy dispersive X-ray spectroscopy (SEM-EDS).

A particle diameter of the S particles was, preferably, 0.05-3 $\mu$m, more preferably, 0.1 $\mu$m or more, further preferably, 0.2 $\mu$m or more, further preferably, 0.25 $\mu$m or more, further preferably, 0.3 $\mu$m or more, still further preferably, 2.5 $\mu$m or less. The particle diameter was obtained by means of a scanning electron microscopes/energy dispersive X-ray spectroscopy (SEM-EDS).

Concentration of the Si particles was, preferably, 10-100 g/L, more preferably, 30 g/L or more, further preferably, 90 g/L or less.

Concentration of the S particles was, preferably, 10-100 g/L, more preferably, 30 g/L or more, further preferably, 90 g/L or less.

Viscosity of the dispersion liquid (dispersion liquid after the dispersion liquid preparing step: dispersion liquid before subjected to the spinning step (before supplied to a spinning device)) was, preferably, 10-10000 mPa·S. The viscosity was measured by a coaxial double cylinder type viscometer. Preferably, in the dispersion liquid, solid component concentration was 0.1-50 mass%.

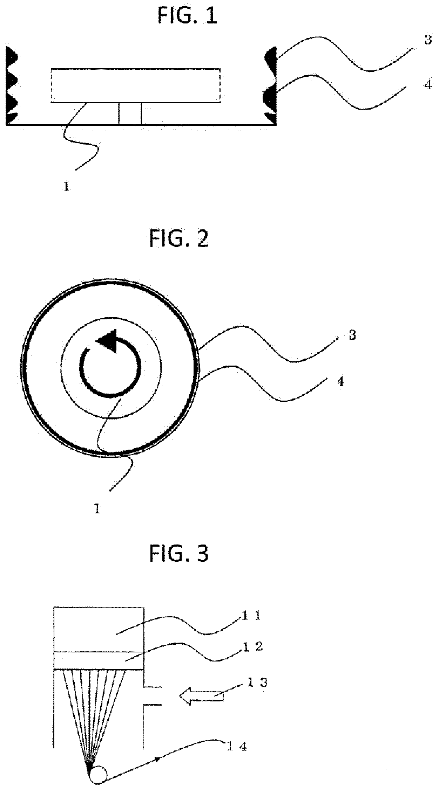

The spinning step is a step of spinning the dispersion liquid. A spinning method includes, for example, a spinning and drawing method (see, FIG. 3), a centrifugal spinning method (see, FIGS. 1 and 2), and an electrospinning method.

With the use of centrifugal spinning method or electrospinning method, a nonwoven fabric can be obtained. With the use of spinning and drawing method, for example, a yarn (or fiber (long fiber)) can be obtained. A fiber material is obtained by the spinning. Examples of the fiber material include a nonwoven fabric, a yarn, and a filament (monofilament or multifilament). A fiber made of the fiber material is a carbon fiber precursor. Preferable spinning method was the spinning and drawing method (specifically, preferable drawing ratio thereof was 2-50). The other preferable spinning method was centrifugal spinning method (specifically, preferable number of spinning of plate was 1000-100000 rpm).

The denaturation step is a step of modifying a carbon fiber precursor (carbon fiber precursor of the fiber material (nonwoven fabric, yarn, or filament) obtained in the spinning step) to a carbon fiber. The step is basically a heating step. In this heating step, the fiber material is heated up to, for example, 50-4000 °C. Preferably, the denaturation step includes a resin removal step. The resin removal step is a step of removing resin contained in the fiber material. The resin removal step is, for example, a heating step. The heating step is a step of heating the fiber material under, for example, an oxidized gas atmosphere. Preferably, the denaturation step includes a carbonizing step. The carbonizing step is a step of carbonizing the fiber material (specifically, fiber material after subjected to the resin removal step). Preferably, the denaturation step includes a graphitizing step. The graphitizing step is a step of providing graphitization treatment to the fiber material (specifically, fiber material after subjected to the carbonizing step). The graphitizing step is, for example, a heating step. The heating step is a step of heating the fiber material (specifically, fiber material after subjected to the carbonizing step) under, for example, an inert gas atmosphere. The heating step is a heat generating (heating) step accomplished by, for example, applying power(electric current) to the fiber material (specifically, fiber material after subjected to the carbonizing step).

The unraveling step is a step of unraveling a fiber material. A nonwoven fabric is unraveled by the unraveling step. The nonwoven fabric is unraveled into its separate fibers. It is natural that some are entangled. A yarn is also unraveled. A long fiber is cut. A long fiber becomes a short fiber. The unraveling step is, for example, a crashing step or a rapped step.

The classifying step is a step of obtaining a predetermined shaped carbon fiber.

A third invention is a member employed in an electrical device. The member is made by using the carbon fiber. The member is, for example, an electrode of a battery. The member is, for example, an electrode of a lithium-ion secondary battery. The electrode contains the carbon fiber (conductive assistant). The electrode is, for example, a negative electrode of a lithium-ion secondary battery. The negative electrode contains a negative-electrode active material (negative-electrode active material made of a carbon fiber material containing the Si particles). For example, the electrode is a positive electrode of a lithium-ion secondary battery. The positive electrode contains a positive electrode active material (positive electrode active material made of a carbon fiber material containing the S particles). The electrode is, for example, an electrode of a capacitor (electric double-layer capacitor). The electrode is, for example, an electrode of a lithium-ion capacitor.

A fourth invention is an electrical device. The electrical device includes the above described member.

A fifth invention is a product with a carbon fiber. A carbon fiber of the product is the above described carbon fiber.

Hereinafter, more detailed description will be given.


[Dispersion Liquid Preparation Step (Step I)]

The dispersion liquid contains the PVA, the CB, and the solvent.

From the spinning characteristics perspective, a degree of polymerization of the PVA was, preferably, 2200-4000, more preferably, 3000 or less. A degree of saponification was, preferably, 75-90 mol%, more preferably, 80 mol% or more. In a case where the degree of polymerization was too low, a yarn was easily cut while spinning. In a case where the degree of polymerization was too high, it was difficult to perform spinning. In a case where the degree of saponification was too low, it was hardly dissolved in water, which makes it difficult to perform spinning. In a case where the degree of saponification was too high, viscosity becomes high, which makes it difficult to perform spinning.

The dispersion liquid may contain, as required, one or a combination of two or more substance selected from a group consisting of vinyl resin (e.g., polyvinyl alcohol copolymer, polyvinyl butyral (PVB)), polyethylene oxide (PEO), acrylic resin (e.g., polyacrylic acid (PAA), polymethyl methacrylate (PMMA), polyacrylonitrile (PAN)), fluorine resin (e.g., polyvinylidene difluoride (PVDF)), naturally-occurring polymers (e.g., cellulosic resin, cellulosic resin derivatives (polylactic acid, chitosan, carboxymethylcellulose (CMC), hydroxyethyl cellulose (HEC), etc.)), engineering plastic resin (polyether sulfone (PES), etc.), polyurethane resin (PU), polyamide resin (nylon), aromatic polyamide resin (aramid resin), polyester resin, polystyrene resin, and polycarbonate resin. An amount thereof is of a range which does not impair effects of the present invention.

The dispersion liquid contains CB having a primary particle diameter (average primary particle diameter) of a range between 21 nm and 69 nm. In a case where CB having a primary particle diameter of 21 nm or less was employed, a specific surface area of thus obtained carbon fiber increased, whereas bulk density decreased. Solid component concentration of the dispersion liquid did not become high, which made it difficult to treat it. In a case where CB having a primary particle diameter beyond 69 nm was employed, a specific surface area of thus obtained carbon fiber decreased, and contact resistance increased.

The solvent is one or a combination of two or more substance selected from a group consisting of water, alcohol (e.g., methanol, ethanol, propanol, butanol, isobutylalcohol, amyl alcohol, isoamyl alcohol, cyclohexanol), ester (e.g., ethyl acetate, butyl acetate), ether (e.g., diethyl ether, dibutyl ether, tetrahydrofuran), ketone (acetone, methyl ethyl ketone, methyl isobutyl ketone), non-proton type polar solvent (e.g., N, N'-dimethylform-amide, dimethyl sulfoxide, acetonitrile, dimethylacetamide), halogenated hydrocarbon (e.g., chloroform, tetrachloromethane, hexafluoroisopropyl alcohol), and acid (acetic acid, formic acid, etc.). From the environmental perspective, water or alcohol was preferred. Water was specifically preferred.

Preferably, the dispersion liquid contains Si particles (or S particles). The particles have a particle diameter (average particle diameter) of 0.05-3 $\mu$m. There was a possible problem that particles having a particle diameter beyond 3 $\mu$m might not enter into a fiber while spinning. In a case where a particle diameter was too small, i.e., less than 0.05 $\mu$m, production cost increased. In a case of metal silicon particles, there was a possible problem that the metal silicon particles might react with water. In a case of metal silicon particles, a specific surface area increased and a reaction area increased. As a result, the metal silicon particles lost suitability as a negative-electrode active material of a lithium-ion battery.

In the present invention, Si particles (metal silicon particles) are substantially elemental silicon. S particles are substantially elemental sulfur. "Substantially" means that a case of containing impurities generated in steps and a case of containing impurities generated when surfaces of particles are oxidized in storage, etc. are also included. The particles of the present invention may be any particles if the particles contain elemental silicon (or elemental sulfur). For example, a surface of a particle may be coated by other components. The particle may have such a structure that an elemental silicon (or elemental sulfur) is dispersed within the particle composed of the other component. For example, particles in which Si particles are coated by carbon are exemplified. Particles in which Si particles are dispersed within $SiO_2$ are exemplified. Particles in which S particles are coated by a surface activating agent are exemplified. In a case of the composite particles, it is sufficient that a particle diameter of the composite particles falls within the above described range. Determination whether or not a Si component (or S component) contained in the carbon fiber is a simple substance or a compound can be made by means of the known measurement method such as X-ray diffraction measurement (XRD).

From the strength and conductivity perspectives, the dispersion liquid may contain carbon nanotube (e.g., single-wall carbon nanotube (SWNT), multi-wall carbon nanotube (MWNT), and combination thereof), etc., as required.

The dispersion liquid contains disperser, as required. The disperser is, for example, a surface activating agent. The surface activating agent may be a small molecular agent or a large molecular agent.

Preferably, a ratio of the PVA and the CB is as follows. If the ratio of PVA is too large, an amount of carbon remaining after carbonization becomes small. To the contrary, if the ratio of PVA is too small, it becomes difficult to perform spinning. Therefore, preferably, the CB accounts for 5-200 mass pts. (more preferably, 10-100 mass pts.) with respect to 100 mass pts. of the PVA.

In a case where the Si particles (or S particles) were contained, a preferable ratio was [mass of the Si particles (or S particles)]/[mass of the CB + mass of the Si particles (or S particles)] = 20-94%. Alternatively, a preferable total amount of the particles and the CB were 5-200 mass pts. (more preferably, 10-100 mass pts.) with respect to 100 mass pts. of the PVA. If the amount of CB is too large, a capacity as a negative-electrode active material (or positive electrode active material) decreased. If the amount of CB is too small, conductivity was lost.

If concentration of solid matter (components other than a solvent) in the dispersion liquid was too high, it was difficult to perform spinning. Or if the concentration is too low, it was also difficult to perform spinning. Concentration of the solid matter was, preferably, 0.1-50 mass% (more preferably, 1-30 mass%, further preferably, 5-20 mass%). If viscosity of the dispersion liquid is too high, it was difficult to eject the dispersion liquid through a nozzle in spinning. To the contrary, if the viscosity is too low, it was difficult to perform spinning. Therefore, viscosity of the dispersion liquid (viscosity in spinning: measured by a coaxial double cylinder type viscometer) was, preferably, 10-10000 mPa·S (more preferably, 50-5000 mPa·S, further preferably, 500-5000 mPa·S).

The dispersion liquid preparation step includes, for example, a mixing step and a micronizing step. The mixing step is a step of mixing the PVA and the CB. The micronizing step is a step of micronizing the CB. The micronizing step is a step of applying a shearing force to the CB. The micronizing step serves to unravel secondary agglomerate(aggregation) of CB. The order of the mixing step and the micronizing step is pretermitted(is not asked). They may be performed at the same time.

In the mixing step, there are cases where both of the PVA and the CB are particles, where one is particle and the other is solution (dispersion liquid), and where both are solution (dispersion liquid). From the operational perspective, the case where the both of the PVA and the CB are solution (dispersion liquid) is preferred.

In the micronizing step, for example, a media less bead mill is employed. Alternatively, a bead mill is employed. Further alternatively, an ultrasonic wave irradiation device is employed. In order to avoid contamination of foreign matters, the media less bead mill is preferably employed. In order to control a particle diameter of CB, a bead mill is preferably employed. In order to simplify an operation of the step, the ultrasonic wave irradiation device is employed. In the present invention, the bead mill was used because control of the particle diameter of CB was important.

Conditions of the present Step I affect a diameter of carbon fiber, the number of "waviness", a size and the number of protruding portions on a surface of carbon fiber, components of carbon, and a ratio of Si particles (or S particles).

[Spinning Step (Step of Producing Fiber Material (Carbon Fiber Precursor): Step II)]

For example, a centrifugal spinning device illustrated in FIGS. 1 and 2 was employed. FIG. 1 is a schematic side surface view of the centrifugal spinning device. FIG. 2 is a schematic plane view of the centrifugal spinning device. In FIGS. 1 and 2, 1 denotes a spinning body (plate). The plate 1 is a hollow body. The plate 1 is provided with a nozzle (or a hole) in its surface. The interior (hollow portion) (not shown) of the plate 1 is filled with a dope. The plate 1 is spun at high speed. This contributes to extension of the dope by a centrifugal force. At the time, the solvent is volatilized, thereby being accumulated on a collection plate 3. As a result of the accumulation, a nonwoven fabric 4 is formed.

The centrifugal spinning device may include a heating device for heating the plate 1. The centrifugal spinning device may include a dope continuously supplying device. The centrifugal spinning device is not limited to what is illustrated in FIGS. 1 and 2. For example, the plate 1 may be placed vertically. Alternatively, the plate 1 may be secured on an upper portion of the centrifugal spinning device. The plate 1 may be a bell type disc or a pin type disc which is used in the publicly known spray drying device. The collection plate 3 is not necessarily a batch-type plate but may be a continuous-type plate. The collection plate 3 may be an inverse conical shaped cylinder which is used in the publicly known spray drying device. Heating throughout the solvent evaporation space is preferred because which enables prompt drying of solvent. A spinning speed (angular velocity) of the plate 1 was, preferably, 1,000-100,000 rpm, more preferably, 5,000-50,000 rpm. This is because, if the speed is too slow, a draw ratio becomes low. Higher speed is preferred. A speed beyond a certain upper limit hardly give a significant improvement. This, however, heavily burdens with the device. Therefore, preferable speed was determined to 100,000 rpm or less. If a distance between the plate 1 and the collection plate 3 is too short, the solvent is hardly evaporated. To the contrary, if a distance between the plate 1 and the collection plate 3 is too long, the device becomes unnecessarily large. A preferred distance changes according to a size of the device. In a case where a dimeter of the plate was 10 cm, the distance between the plate 1 and the collection plate 3 was, for example, between 20 cm and 3 m.

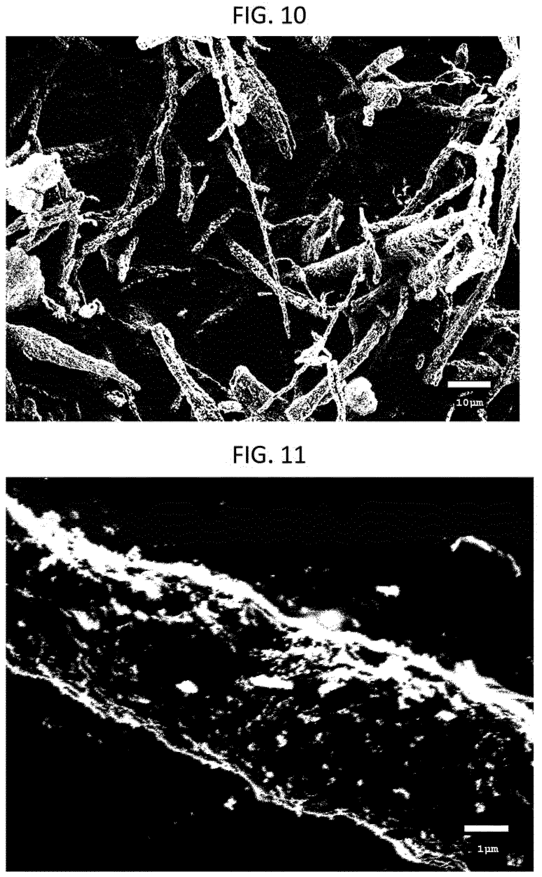

Instead of the centrifugal spinning device, a spinning and drawing device(a stretching-spinning device) may be employed. FIG. 3 is a schematic drawing of a dry-type spinning and drawing device. Here, a dry-type spinning and drawing device was employed but a wet-type spinning and drawing device is also employable. The dry-type spinning and drawing method is a method in which solidification is performed in the air. The wet-type spinning and drawing method is a method in which solidification is performed in a solvent where polyvinyl alcohol is insoluble. Either one of the methods is employable. In FIG. 3, 11 denotes a tank (tank for storing dispersion liquid (polyvinyl alcohol, carbon black (having a primary particle diameter of 21-69 nm) and a solvent). 12 denotes a spinning nozzle. The dispersion liquid within the tank 11 is spun through the spinning nozzle 12. At the time, heated air 13 serves to evaporate the solvent. Residual component is taken up as a yarn 14. In the wet-type spinning and drawing, instead of the heated air, a solvent in which polyvinyl alcohol is insoluble is employed. If a draw ratio is too large, a yarn is cut. If a draw ratio is too small, a yarn cannot be made thinner. A preferred draw ratio was 2-50. More preferred draw ratio was 3 or more. Further preferred draw ratio was 20 or less. In the present step, a long fiber (yarn) made of a carbon fiber precursor can be obtained.

In the spinning and drawing method and the centrifugal spinning method, liquid having a high viscosity (dispersion liquid having high concentration of solid component) higher than that used in the electrospinning method could be used. The centrifugal spinning method is hardly effected by humidity (temperature) in comparison with the electrospinning method. The centrifugal spinning method could achieve a constant spinning for a long time. The spinning and drawing method and the centrifugal spinning method could achieve high productivity. The centrifugal spinning method is a spinning method in which a centrifugal force is utilized. Therefore, a draw ratio in spinning is high. Possibly, for this reason, a degree of orientation of carbon particles in a fiber was high. Conductivity was high. Thus obtained carbon fiber had a small diameter. Variation of fiber diameter was small. Contamination of metal powders was little. A surface area was large in a case of a nonwoven fabric.

The fiber material obtained in the present step (spinning step) is made of a carbon fiber precursor. The carbon fiber precursor is a mixture of PVA and CB. The fiber material may be made of a plurality of the nonwoven fabrics (made of the carbon fiber precursor) which are laminated together. The laminated nonwoven fabrics may be compressed by a roller, etc. With the compression, a film thickness and concentration are controlled, as required. A yarn (filament) may be wound around a bobbin.

A nonwoven fabric (made of the carbon fiber precursor) is peeled off from the collection body when it is treated. Alternatively, the nonwoven fabric is treated while it is on the collection body. Further alternatively, similar to a case of cooking a cotton candy, thus generated nonwoven fabric may be taken out to be wound around a stick.

Conditions of the present Step II affect a diameter of carbon fiber, the number of "waviness", a size and the number of protruding portions on a surface of carbon fiber, components of carbon, and a ratio of Si particles (or S particles).

[Denaturation Step (Step III)]

[Carbonization (Step III-1)]

A fiber material made of a carbon fiber can be obtained from a fiber material made of the carbon fiber precursor. That is, the carbon fiber precursor is modified to a carbon fiber. Denaturation treatment is, for example, heat treatment. Specifically, the denaturation treatment is heat treatment performed under an oxidized gas atmosphere. PVA consisting the carbon fiber precursor is removed by the heat treatment. More specifically, carbon sources other than CB are removed.

The present step is performed after the spinning step (the Step II).

Oxidized gas used in the present step is an oxygen atom-containing compound or an electron acceptor type compound. The oxidized gas is, for example, one or a combination of two or more substance selected from a group of air, oxygen, halogen gas, nitrogen dioxide, ozone, vapor, carbon dioxide, etc. Air is preferred from the perspective of cost performance and speedy non-solubleness at a low temperature. Alternatively, a gas containing halogen gas is preferred. The halogen gas is, for example, fluorine, iodine, and bromine. Fluorine is suitable among those. Alternatively, a mixed gas of the above exemplified components is preferred.

A temperature of the heat treatment was, preferably, 100-400 °C (more preferably, 150-350 °C). A time for heat treatment was, preferably, between 3 min. and 24 hrs. (more preferably, between 5 min. and 2 hrs.).

A carbon fiber could be obtained in the present step.

In a case of nonwoven fabric, the present step is performed by sheet by sheet or continuously by roll to roll. Alternatively, the nonwoven fabric in a rolled state is subjected to heat treatment. Further alternatively, the nonwoven fabric is subjected to heat treatment while it is formed into a lump to be stuffed in a sheath. In a case of a yarn (filament), the yarn is subjected to heat treatment while it is wound around a bobbin. From the perspective of productivity, the yarn is subjected to continuous heat treatment, preferably, while it is in a state of lump or it is wound around a bobbin.

[Reduction Treatment (Step III-2)]

In a case where carbide of PVA remains in the fiber material (carbon fiber), preferably, reduction treatment is performed in order to remove the carbide. The reduction treatment is heat treatment. Preferably, the heat treatment is performed under inert gas atmosphere. According to the present step, carbide of PVA is removed and, as a result thereof, weight reduction is achieved. The present step is performed after the Step III-1.

An inert gas used in the present step is a gas which do not chemically react with a non-soluble carbon fiber precursor in the process of carbonization treatment. For example, the inert gas is one or a combination of two or more gas selected from a group consisting of carbon monoxide, carbon dioxide, nitrogen, argon, krypton, etc. Nitrogen gas is preferred among those gases from the perspective of cost.

A processing temperature of the present step was, preferably, 500-2000 °C (more preferably, 600-1500 °C). In a case of a low temperature lower than 500 °C, reduction hardly progresses. In a case of a high temperature beyond 2000 °C, graphitization occurs. If the below mentioned graphitization treatment is performed, a temperature rising up to beyond 2000 °C is allowable. A treatment time of the present step was, preferably, between 5 min. and 24 hrs. (more preferably, between 30 min. and 2 hrs.).

[Graphitization Treatment (Step III-3)]

Preferably, graphitization treatment is performed. Preferably, the graphitization treatment is performed under inert gas atmosphere. In a case where CB containing iron (impurities) is used as a raw material, the present step is important. This step serves to remove the iron. This step contributes to progression in crystallinity of CB, thereby improving conductivity. Preferably, the present step is performed after the step III-2.

In the present step, the inert gas is a gas which does not chemically react with a carbon fiber made-precursor in the process of graphitization treatment. For example, the inert gas is carbon monoxide, carbon dioxide, argon, krypton, etc. A nitrogen gas is not preferred because it causes electrolytic dissociation.

A processing temperature of the present step was, preferably, 2000-3500 °C (more preferably, 2300-3200 °C). Preferable treatment time was 2-24 hrs.

The present step is executed while keeping the above described temperature. The present step is executed, specifically, in such a manner that a sheath is filled with the gas and applied with a power(electric current). Joule heat generated by the power apply keeps the temperature. It is possible to perform graphitization by means of microwave heating. The graphitization treatment is, preferably, electrical heating from the perspective of production cost.

[Unraveling Step (Step IV)]

The present step is a step of obtaining a carbon fiber from the fiber material (made of carbon fiber) obtained in the above described step. The present step is a step of, for example, crashing the fiber material obtained in the Step II (alternatively, in the Step III-1, the Step III-2, or the Step III-3). A fiber can be obtained in the crashing step. Rapping of the fiber material can also unravel the fiber material. In other words, fibers can be obtained.

For example, a cutter mill, a hammer mill, a pin mill, a ball mill, or a jet mill is utilized for crashing. Either one of a wet type method and a dry type method can be employed for crashing. It is preferable to employ dry type method when the resulting fibers are used for a nonaqueous electrolytic secondary battery.

With the use of a media less mill, crushing of fiber is avoidable. Therefore, it is preferable to employ a media less mill. For example, it is preferable to employ a cutter mill and an air jet mill.

Conditions of the present Step IV affects a length of carbon fiber.

[Classifying Step (Step V)]

In the present step, fibers of a desired size are selected from the fibers obtained in the Step IV. For example, carbon fibers passed through a sieve (aperture of 20-300 $\mu$m) are used. As apertures of a sieve becomes smaller, a rate of carbon fiber which is not used becomes larger. This induces increase of cost. As apertures of a sieve becomes larger, a rate of carbon fiber which is used becomes larger. Variation in quality of carbon fiber becomes large. A method equivalent to the use of sieve may be employed. For example, air classification (cyclone classification) may be employed.

Conditions of the present Step V affects a length of carbon fiber.

[Carbon Fiber]

A carbon fiber which satisfies the following Requirements 1-4 shows significant characteristics.

Further, a carbon fiber satisfying Requirement 5 (or Requirement 6) shows significant characteristics.

[Requirement 1]

Diameter of the carbon fiber: 0.5-6.5 $\mu$m
Length of the carbon fiber: 5-65 $\mu$m

(Diameter of the carbon fiber) < (Length of the carbon fiber)

A preferable diameter was 0.8 $\mu$m or more. A preferable diameter was 5 $\mu$m or less. A preferable length was 10 $\mu$m or more. A preferable length was 40 $\mu$m or less.

A large diameter made a surface area small. A small diameter made productivity lower. A short length caused to lose characteristics of fiber shape. A long length made handling ability when manufacturing an electrode lower. From the aforementioned perspective, the values were decided.

The diameter was obtained from a SEM image of carbon fiber. That is, 10 carbon fibers (carbon fibers satisfying the Requirement 1) were randomly extracted from a SEM image of carbon fibers, and an average diameter thereof was calculated. In a case where the number of carbon fibers are less than 10 (N), an average diameter is calculated based on the N number of carbon fibers.

The length was calculated from a SEM image of carbon fiber. In other words, 10 carbon fibers (carbon fibers satisfying the Requirement 1) were randomly extracted from a SEM image of carbon fibers, and an average length thereof was calculated. In a case where the number of carbon fibers is less than 10 (N), an average length is calculated based on the N number of carbon fibers.

[Requirement 2]

The carbon fiber includes "waviness".

The "waviness" is applied to a carbon fiber of which shape is at least defined(fixed). The "waviness" is not applied to a fiber which is soft (of which shape can be changed at a temperature of 25 °C) like a single-layered carbon nanotube.

The "waviness" is as follows. An image of the carbon fiber was taken by a scanning electron microscope (SEM). Thus taken two-dimensional image was observed. At the time, if a bending portion (having a radius of curvature of 1-100 $\mu$m, and height of 2-50 $\mu$m) was found, the bending portion was considered as the "waviness". More specifically, a carbon fiber with a bending portion having the above described characteristics is considered as a carbon fiber having the "waviness". A bending portion not having the above described characteristics is not considered as "waviness".

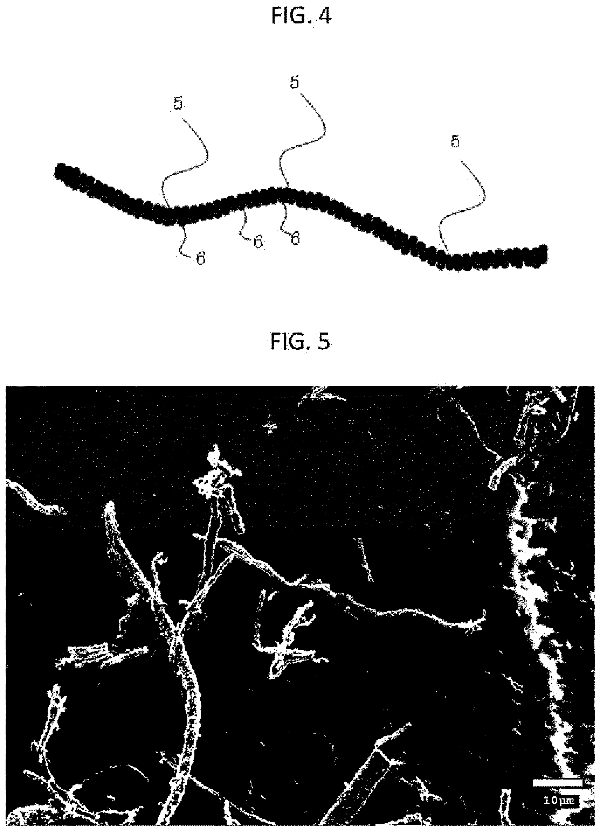

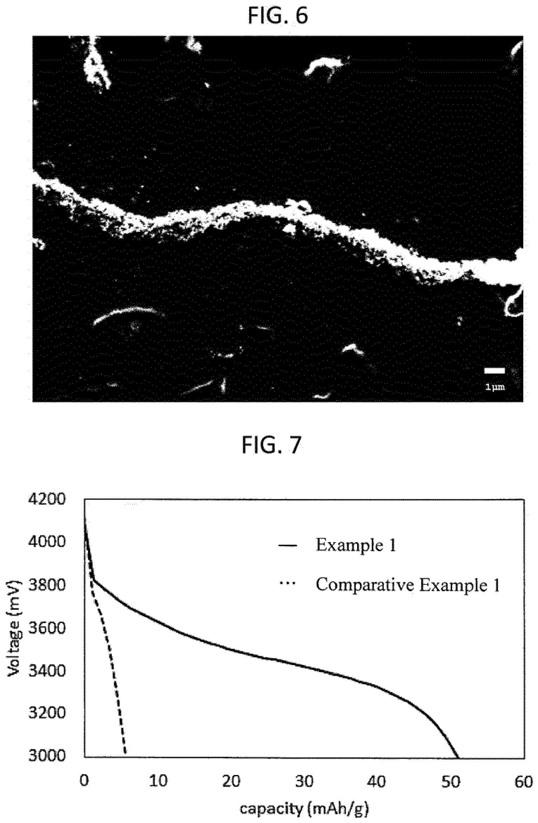

FIG. 6 is a SEM image of a carbon fiber. FIG. 4 is a schematic diagram of the carbon fiber of FIG. 6. In FIG. 4, a "waviness (bending portion)" portion is provided with a numeral reference 5.

A preferable number of "waviness" of the carbon fiber was 1-6 per 5 $\mu$m length (length along the carbon fiber) of the carbon fiber. More preferably, the number was less than 3.

In a case where the number of "waviness" was small, characteristics (effects) of the present invention was low. A carbon fiber with many "waviness" were costly.

[Requirement 3]

The carbon fiber includes protruding portions (protrusions:raised portions:bumps:umbonal portions:projections: projecting portions; see, FIGS. 4 and 6).

In FIG. 4, 6 is attached to each protruding portion (projection: projecting portion).

Protruding height of the protruding portion: 20-300 nm

A preferable protruding height was 200 nm or less.

The number of protruding portions (protruding portions which are consisted of the CB and which have protruding height of 20-300 nm): 3-25 per 1 $\mu$m length (length along the carbon fiber) of the carbon fiber.

The number of protruding portions was, preferably, five or more, more preferably, 23.5 or less, further preferably, 20 or less.

In a case where the number of "protruding portions" was small, or in a case where the height of the "protruding portions" was low, a surface area decreased and characteristics (effects) of the present invention was low. In a case where the height of the "protruding portions" was high, the carbon fiber was easy to be cut. It was difficult to produce a carbon fiber including a large number of "protruding portions".

For producing a carbon fiber with protruding portions having the above described characteristics, use of CB having an average primary particle diameter of 21-69 nm was important. This is because, a particle diameter of CB was a material factor for deciding height of a protruding portion on a surface of the carbon fiber.

The protruding portion was observed from a SEM image of a carbon fiber. In other words, a SEM image of a power (3,000-10,000 times) capable of confirming a surface shape of a carbon fiber was used. In this image, the number of protruding portions having the above described characteristics was randomly counted five times in a length of 1 $\mu$m in a length direction of a fiber. Then, an average value thereof was calculated.

In order to form a "protruding portion" having the above described characteristics, it was preferred that a carbon component was substantially CB having a primary particle diameter of 21-69 nm. This is because, a particle diameter of CB defines the protruding height. "Substantially" means that carbon components other than those added on purpose, e.g., carbide of PVA and a carbon component which coats metallurgical silicon particles, are removed.

[Requirement 4]

The carbon fiber includes CB (carbon component).

Primary particle diameter of the CB: 21-69 nm

Preferably, the primary particle diameter was 60 nm or less.

The primary particle diameter was obtained by means of a Transmission Electron Microscope (TEM). More specifically, in a TEM image having a power (10,000-100,000 times) capable of sufficiently confirming a primary particle diameter of CB, 10 particles having the above described particle diameter was randomly selected to be measured. Then, an average particle diameter thereof was calculated. If the number of particles having the above described particle diameter is 10 or less (N) in the TEM image, an average particle diameter of N particles was calculated.

A value of the primary particle diameter is equivalent to a value of the primary particle diameter (21-69 nm) of CB used in producing dispersion liquid. This is natural in view of the meaning of the primary particle diameter. Protruding portions of the [Requirement 3] are resulting from an aggregate of CB having the primary particle diameter.

The protruding portion (protruding height: 20-300 nm) 6 is made of the CB.

[Requirement 5]

The carbon fiber contains Si particles (e.g., metal silicon particles).

$$[\text{mass of the Si particles}]/[\text{mass of the CB} + \text{mass of the Si particles}] = 20\text{-}94 \, \%$$

The value was, more preferably, 40 % or more, further preferably, 90 % or less.

In a case where the amount of Si particles was too small, a capacity as an active material decreased. In a case where the amount of Si particles was too large, conductivity was degraded.

An amount of the Si particles was counted by SEM-EDS. More specifically, in an EDS spectrum (axis of abscissa: energy of X-ray (eV), axis of ordinate: X-ray count numbers), an amount of Si particles was calculated based the counted numbers of carbon (0.277 eV) and silicon (1.739 eV).

A size of the Si particles was, preferably, 0.05-3 $\mu$m, more preferably, 0.1 $\mu$m or more, further preferably, 0.2 $\mu$m or more, further preferably, 0.25 $\mu$m or more, further preferably, 0.3 $\mu$m or more, still further preferably, 2.5 $\mu$m or less.

The size was measured by SEM-EDS. In other words, an electron ray was controlled focusing at a characteristic X ray (1.739 eV) of Si. X ray mapping of silicon was performed. A size of Si particles was measured based on thus obtained image.

[Requirement 6]

The carbon fiber contains S particles (sulfur particles).

$$[\text{mass of the S particles}]/[\text{mass of the CB} + \text{mass of the S particles}] = 20\text{-}94\ \%$$

More preferable ratio was 40 % or more. Further preferable ratio was 90 % or less.

If an amount of the S particles was too small, a capacity as an active material decreased. If an amount of the S particles was too large, conductivity was degraded.

The amount of S particles was counted by SEM-EDS. More specifically, in an EDS spectrum (axis of abscissa: energy of X-ray (eV), axis of ordinate: X-ray count numbers), the amount of S particles was calculated based the counted numbers of carbon (0.277 eV) and sulfur (2.307 eV).

A size of the S particles was, preferably, 0.05-3 $\mu$m, more preferably, 0.1 $\mu$m or more, further preferably, 0.2 $\mu$m or more, further preferably, 0.25 $\mu$m or more, further preferably, 0.3 $\mu$m or more, still further preferably, 2.5 $\mu$m or less.

The size was measured by SEM-EDS. More specifically, an electron ray was controlled focusing at a characteristic X ray (2.307 eV) of sulfur. X ray mapping of sulfur was performed. A size of S particles was measured based on thus obtained image.

Preferably, the carbon fiber is a carbon fiber having the above described characteristics (Requirements 1-4, Requirements 1-5, or Requirements 1, 2, 3, 4, and 6). Here, a carbon fiber which does not have such characteristics may be contained. For example, in so far as the following condition was satisfied, the characteristics of the present invention was not impaired largely. That is, the condition of "(volume of carbon fiber having the characteristics of the present invention)/(volume of carbon fiber having the characteristics of the present invention + volume of carbon fiber having no characteristics of the present invention) $\geq$ 0.5" was satisfied. A ratio thereof was, preferably, 0.6 or more, more preferably, 0.7 or more, further preferably, 0.8 or more, still further preferably, 0.9 or more. A volume ratio can be obtained by, for example, a method of electron microscopic observation. From this perspective, the diameter can be considered as an "average diameter". The length can be considered as an "average length". The particle diameter can be considered as an "average particle diameter". The number of waviness can be considered as an "average value". The protruding height can be considered as an "average protruding height". The number of protruding portions can be considered as an "average value". The volume of particles can be considered as an "average value". The size of particles can be considered as an "average value".

[Electrode]

The carbon fiber is employed as a member of an electrical element (an electron element is also included in the electrical element). For example, the carbon fiber is utilized as a member of a storage battery, a capacitor, a fuel battery, etc.

The carbon fiber is applied to an electrode of a storage battery. The storage battery includes, for example, a lead storage battery, a nickel-cadmium battery, a nickel-hydrogen storage cell, a lithium-ion battery, a natrium-sulfur battery, a redox-flow type battery, and a lithium-ion capacitor. Among them, a lithium-ion battery is suitable. The electrode is, preferably, a negative electrode (or positive electrode). It is, preferably, a negative-electrode active material (or positive-electrode active material). It is, preferably, a conducting agent.

Among the carbon fibers of the present invention, the carbon fiber made only of a carbon component is used as a conducting agent. The carbon fiber containing Si (metal silicon) particles is used as a negative-electrode active material. The carbon fiber containing S (sulfur) particles is used as a positive-electrode active material.

The lithium-ion battery includes various members (e.g., a positive electrode, a negative electrode, a separator, and an electrolysis solution). The positive electrode (or negative electrode) is made in the following manner. That is, a mixture containing an active material (positive electrode active material or negative-electrode active material), a conducting agent, a binding agent, etc. is layered over a collector (e.g., aluminum foil or copper foil). Accordingly, a positive electrode (or negative electrode) can be obtained.

Carbon materials such as a hardly graphitizable carbon, an easy graphitizable carbon, a graphite, heat decomposed carbons, cokes, vitrified carbons, an organic polymeric compound fired body, a carbon fiber, or an activated carbon are exemplified as the negative-electrode active material. A material including at least one selected from a group consisting of a simple substance, an alloy and a compound of a metallic element capable of forming an alloy with lithium, and a simple substance, an alloy and a compound of a metalloid element capable of forming an alloy with lithium is used (hereinafter referred to as "alloyed negative-electrode active material").

As the metallic element (or metalloid element), exemplified are tin (Sn), lead (Pb), aluminum, indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y), or hafnium (Hf). Specific examples of compound include LiAl, AlSb, CuMgSb, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_v$ ($0 < v \leq 2$), $SnO_w$ ($0 < w \leq 2$), $SnSiO_3$, LiSiO, LiSnO, etc. A lithium titanium-based compound oxide (spinel-type, ramstellite-type, etc.) is also preferred.

The positive electrode active material may be any material if it can occlude and release lithium ion. Preferable examples thereof include lithium-containing complex metallic oxide, olivine type lithium phosphate, etc.

The lithium-containing complex metallic oxide is a metallic oxide containing lithium and transition metal. Alternatively, the lithium-containing complex metallic oxide is a metallic oxide in which transitional metal in metallic oxide is partially substituted by heteroelement. It is more preferred that the transition metal element contains one or more element selected from a group consisting of cobalt, nickel, manganese, and iron. Examples of the lithium-containing complex metallic oxide include $Li_kCoO_2$, $Li_kNiO_2$, $Li_kMnO_2$, $Li_kCo_mNi_{l-m}O_2$, $Li_kCo_mM_{l-m}O_n$, $Li_kNi_{l-m}M_mO_n$, $Li_kMn_2O_4$, and $Li_kMn_{2-m}MnO_4$ (M is at least an element selected from a group consisting of Na, Mg, Sc, Y, Mn, Fe, Co, Ni, Cu, Zn, Al, Cr, Pb, Sb, and B; k = 0-1.2, m = 0-0.9, n = 2.0-2.3).

A compound (lithium iron phosphorus oxide) that has an olivine type crystal structure and that can be expressed by a general formula of $Li_x Fe_{1-y}M_yPO_4$ (M is at least an element selected from a group consisting of Co, Ni, Cu, Zn, Al, Sn, B, Ga, Cr, V, Ti, Mg, Ca, and Sr; $0.9 < x < 1.2$, $0 \leq y < 0.3$) is also employable. A suitable example of the lithium iron phosphorus oxide includes $LiFePO_4$.

As lithium thiolate, a compound expressed by a general formula of X-S-R-S-(S-R-S)n-S-R-S-X' is employed. The compound is disclosed in European Patent No. 415856.

In lithium thiolate and the carbon fiber of the present invention, in a case where a carbon fiber containing sulfur is used as a positive electrode active material, a lithium-containing electrode such as lithium foil is preferable as a counter electrode since the active material itself does not contain lithium ion.

A separator is made of a porous film. The separator may be made by laminating two or more porous films. A porous film made of a synthetic resin (e.g., polyurethane, poly(tetrafluoroethylene), polypropylene, and polyethylene) is exemplified as a porous film. A ceramic-made porous film may also be employed.

An electrolysis solution contains a nonaqueous solvent and an electrolytic salt. The nonaqueous solvent is, for example, cyclic carbonate ester (propylene carbonate, ethylene carbonate, etc.), chainlike ester (diethyl carbonate, dimethyl carbonate, ethyl methyl carbonate, etc.), ethers ($\gamma$-butyrolactone, sulfolane, 2-methyltetrahydrofuran, dimethoxy-ethane, etc.). They can be employed alone or in combination (of two or more). The carbonate ester is preferred from the perspective of oxidation stability.

The electrolytic salt is, for example, $LiBF_4$, $LiClO_4$, $LiPF_6$, $LiSbF_6$, $LiAsF_6$, $LiAlCl_4$, $LiCF_3SO_3$, $LiCF_3CO_2$, LiSCN, short-chain fatty carboxylic acid lithium, LiBCl, $LiB_{10}Cl_{10}$, halogenated lithium (LiCl, LiBr, Lil, etc.), borates (bis(1,2-benzenediolate(2-)-O,O') lithium borate, bis(2,3-naphthalenediolate(2-)-O,O') lithium borate, bis(2,2'-biphenyldiolate(2-)-O,O') lithium borate, bis(5-fluoro-2-olate-1-benzene sulphonic acid-O,O') lithium borate, etc.), imide salts ($LiN(CF_3SO_2)_2$, $LiN(CF_3SO_2)(C_4F_9SO_2)$, etc.). A lithium salt such as $LiPF_6$, $LiBF_4$, etc. is preferred. $LiPF_6$ is specifically preferred.

Gel electrolyte in which electrolysis solution is kept in high polymeric compound may be employed as electrolysis solution. The high polymeric compound is, for example, polyacrylonitrile, polyvinylidene fluoride, copolymer of polyvinylidene fluoride and polyhexafluoropropylene, poly(tetrafluoroethylene), polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile butadiene rubber, polystyrene, and polycarbonate. From the perspective of electrochemical stability, high polymeric compound having a structure of polyacrylonitrile, polyvinylidene fluoride, polyhexafluoropropylene, or polyethylene oxide is preferred.

The conducting agent is, for example, glaphite (natural graphite, artificial graphite, etc.), carbon black (acetylene black, ketjen black, channel black, furnace black, lamp black, thermal black, etc.), conductive fiber (carbon fiber, metallitic fiber), metal (Al, etc.) powders, conductive whisker (zinc oxide, potassium titanate, etc.), conductive metallic oxide (titanium oxide, etc.), organic conductive material (phenylene derivatives, etc.), and carbon fluoride,

The binding agent is, for example, polyvinylidene fluoride, poly(tetrafluoroethylene), polyethylene, polypropylene, aramid resin, polyamide, polyimide, polyamide imide, polyacrylonitrile, polyacrylic acid, polymethyl acrylate, ethyl polyacrylate, hexyl polyacrylate, polymethacrylic acid, polymethylmethacrylate, polyethyl methacrylate, poly(hexyl methacrylate), polyvinyl acetate, polyvinyl pyrrolidone, polyether, polyether sulfone, hexafluoro polypropylene, styrene-butadiene rubber, denaturation acrylic rubber, and carboxymethylcellulose.

The electrode (negative electrode and positive electrode) of a lithium-ion battery is made in such a manner that an active material (e.g., graphite material, lithium cobalt oxide) is layered over a collector electrode plate (e.g., copper foil or aluminum foil). In the materials of the present invention, the carbon fiber made only of a carbon component is used as a conducting agent. The carbon fiber containing Si particles is used as a negative-electrode active material. The carbon fiber containing S particles is used as a positive electrode active material.

The materials of the present invention may be used in combination with the conventional active material. In a case of the combined use, an amount of the carbon fiber with respect to the total amount of active material is preferably 3-50 mass%, more preferably, 5-30 mass%, specifically preferably, 10-20 mass%.

The carbon fiber is used as a conductive assistant. A material having no conductivity, e.g., lithium cobalt oxide, is used for a positive electrode of a lithium-ion battery. With the use of the carbon fiber, internal resistance is lowered. In a lithium-ion battery, in a case where an alloy based negative electrode material having low conductivity is used, the carbon fiber can be used as a conductive assistant of a negative electrode. An amount of the conductive assistant with respect to the total amount of active material that is used for an electrode is, preferably, 0.1-20 mass%, more preferably, 0.5-10 mass%, specifically preferably, 0.5-3 mass%.

The carbon fiber may be used in combination with the conventional conductive assistant. In a case of the combined use, an amount of the carbon fiber with respect to the total amount of the conductive assistant is preferably 10-70 mass%, more preferably, 20-60 mass%, specifically preferably, 30-50 mass%.

The carbon fiber is applied to an electrode of a capacitor. The capacitor is an electrical double layer capacitor. The capacitor is a lithium-ion capacitor. Preferably, the electrode is a negative electrode. A negative electrode of a lithium-ion capacitor is generally made in such a manner that a negative-electrode active material is layered over a collector electrode plate (e.g., copper foil). The material of the present invention is used as a conductive assistant. The material of the present invention is used as a negative-electrode active material.

Hereinafter, substantial examples are described. The present invention, however, is not limited only to the following examples. Various modifications and applications falls under the scope of the present invention in so far as the characteristics of the present invention is not impaired largely.

[Example 1]

70 mass pts. of PVA (Product Name: Poval 224, Degree of saponification: 88 mol%, Degree of polymerization: 2400, produced by KURARAY CO., LTD), 30 mass pts. of carbon black (Product Name: #3050B, Primary particle diameter: 50 nm, Iron: 1,000 ppm, produced by Mitsubishi Chemical Corporation), and 400 mass pts. of water are mixed by using a bead mill. As a result, a carbon black dispersion liquid (PVA was dissolved) was obtained.

A centrifugal spinning device (see, FIGS. 1 and 2, Distance between nozzle and collection body: 20 cm, Rotary number of plate: 10,000 rpm) was employed. With the dispersion liquid, centrifugal spinning was performed. A nonwoven fabric (made of a carbon fiber precursor) was produced on the collection plate.

Thus obtained nonwoven fabric was heated (at a temperature of 300 °C for one hour in the air).

Then, heating (at a temperature of 3000 °C in a graphitizing furnace) was performed.

Thus obtained nonwoven fabric (made of carbon fibers) was treated by using a mixer. Accordingly, unravelling was performed. In other words, carbon fibers were obtained.

Thus obtained carbon fibers were classified. A sieve (aperture: 75 $\mu$m) was utilized for the classification.

Carbon fibers passed through the apertures of the sieve was measured by SEM-EDS (JSM-7001F (produced by JEOL Ltd.)). A result thereof is illustrated in FIGS. 5 and 6.

Table I shows physical properties of the carbon fibers, i.e., [length (average length), diameter (average diameter), number of "waviness" (number (average value) per 5 $\mu$m length (length along the carbon fiber)), number of protruding portions (protruding height: 20-300 nm) on a surface of the carbon fiber (number (average value) per 1 $\mu$m length (length along the carbon fiber), and BET specific surface area].

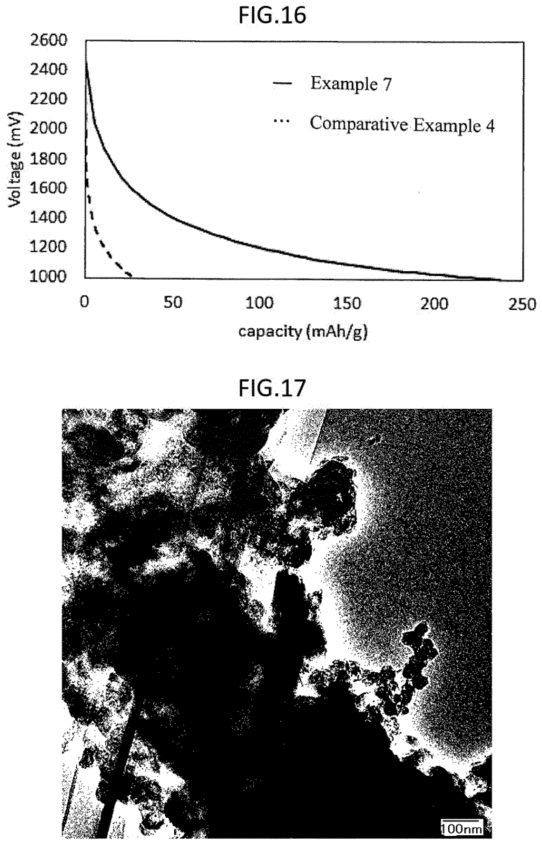

An image of thus obtained carbon fiber that was observed by TEM (Device name: H-7100, manufactured by Hitachi, Ltd.) is shown in FIG. 17. CB was observed. A primary particle diameter of the CB was 50 nm.

5 mass pts. of the carbon fiber, 93 mass pts. of lithium cobalt acid, and 2 mass pts. of polyvinylidene fluoride were dispersed in 200 mass pts. of N-methyl-pyrrolidone. The dispersion liquid was applied onto aluminum foil. After drying, the aluminum foil was pressed. A lithium-ion battery positive electrode could be obtained. Lithium foil (counter electrode) was employed. Ethylene carbonate/diethylene carbonate (1/1 (volume ratio): electrolysis solution) was employed. 1 mol% of $LiPF_6$ (electrolyte) was used. A coin cell of a lithium-ion battery was produced.

The coin cell was charged/discharged at constant current (charging/discharging rate: 10C). A discharge capacity was measured. Thus obtained charging/discharging curve is shown in FIG. 7. The discharge capacity was 50.9 mAh/g. A discharge capacity of the below mentioned Comparison Example 1 was 5.6 mAh/g.

[Example 2]

Except that carbon black (Primary particle diameter: 23 nm, Iron: 1 ppm) was employed instead of the carbon black (Primary particle diameter: 50 nm, Iron: 1,000 ppm) of Example 1, everything was performed according to Example 1. A result thereof is shown in Table 1. CB was observed on thus obtained carbon fiber. A primary particle diameter of the CB was 23 nm.

[Example 3]

Except that the heating treatment (at a temperature of 3000 °C in a graphitizing furnace) of Example 2 was omitted, everything was performed according to Example 2. A result thereof is shown in Table 1. CB was observed on thus obtained carbon fiber. A primary particle diameter of the CB was 23 nm.

[Example 4]

Except that carbon black (Primary particle diameter: 35 nm, Iron: 10 ppm) was employed instead of the carbon black (Primary particle diameter: 23 nm, Iron: 1 ppm) of Example 3, everything was performed according to Example 3. A result thereof is shown in Table 1. CB was observed on thus obtained carbon fiber. A primary particle diameter of the CB was 35 nm.

[Example 5]

Except that carbon black (Primary particle diameter: 60 nm, Iron: 10 ppm) was employed instead of the carbon black (Primary particle diameter: 23 nm, Iron: 1 ppm) of Example 3, everything was performed according to Example 3. A result thereof is shown in Table 1. CB was observed on thus obtained carbon fiber. A primary particle diameter of the CB was 60 nm.

[Example 6]

Except that the amount of carbon black was changed to 150 mass pts. from 30 mass pts. of Example 1, everything was performed according to Example 1. A result thereof is shown in Table 1. CB was observed on thus obtained carbon fiber. A primary particle diameter of the CB was 50 nm.

[Example 7]

Except that PVA of which degree of polymerization was 2000 and degree of saponification was 88 mol% was employed, everything was performed according to Example 1. A result thereof is shown in Table 1. CB was observed on thus obtained carbon fiber. A primary particle diameter of the CB was 50 nm.

[Example 8]

Except that PVA of which degree of polymerization was 2400 and degree of saponification was 70 mol% was employed, everything was performed according to Example 1. A result thereof is shown in Table 1. CB was observed on thus obtained carbon fiber. A primary particle diameter of the CB was 50 nm.

[Comparison Example 1]

"Example 5 of the Patent Literature 2" corresponds to the Comparison Example 1.

70 mass pts. of PVA (Product Name: Poval 117, Degree of saponification: 98-99 mol%, Degree of polymerization: 1700, produced by KURARAY CO., LTD), 30 mass pts. of mesophase pitch (Product Name: AR, produced by Mitsubishi Gas Chemical Company, Inc.), and 400 mass pts. of water were mixed by using a bead mill. A mesophase pitch dispersion liquid (PVA was dissolved) could be obtained.

The centrifugal spinning device of Example 1 was employed. With the dispersion liquid, centrifugal spinning was performed. A nonwoven fabric made of a carbon fiber precursor was produced on a collection plate.

Thus obtained nonwoven fabric was heated (at a temperature of 300 °C for 1 hour in the air).

Subsequently, heating was performed (at a temperature of 900 °C under the argon gas atmosphere).

Further subsequently, heating was performed (at a temperature of 3000 °C in a graphitizing furnace).

Thus obtained 10 mg of carbon fiber made-nonwoven fabric was placed in a glass bottle. 10 g of water was charged thereinto. Unraveling was performed by means of ultrasonic irradiation. Thus obtained carbon fiber dispersed water was filtered by using a filter. Accordingly, carbon fibers were collected.

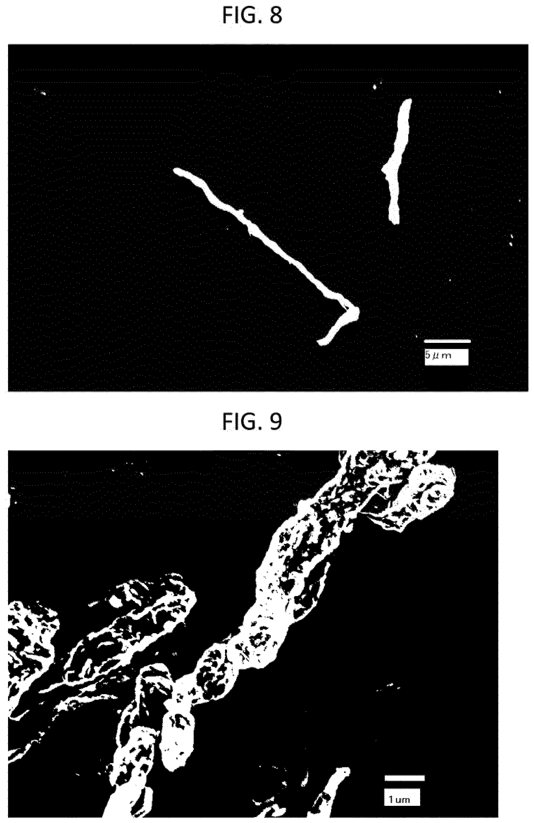

Thus obtained carbon fibers were measured by SEM (JSM-7001F). A result thereof is shown in FIGS. 8 and 9.

Physical properties of thus obtained carbon fibers are shown in Table 1.

The carbon fibers of Comparison Example 1 were used to produce a coin cell of a lithium-ion battery according to Example 1. Charging/discharging in a manner similar to Example 1 was performed. A discharge capacity was measured. Thus obtained charging/discharging curve is illustrated in FIG. 7.

[Comparison Example 2]

The carbon fibers obtained in Comparison Example 1 were classified by using a sieve (aperture: 75 $\mu$m). With thus classified carbon fibers, everything was performed according to Example 1. A result thereof is shown in Table 1.

[Comparison Example 3]

Except that carbon black (Primary particle diameter: 15 nm, Iron: 1,000 ppm) was employed instead of the carbon black (Primary particle diameter: 23 nm, Iron: 1 ppm) of Example 3, everything was performed according to Example 3. High viscosity of dope disabled spinning.

[Comparison Example 4]

Except that carbon black (Primary particle diameter: 75 nm, Iron: 10 ppm) was used instead of the carbon black (Primary particle diameter: 23 nm, Iron: 1 ppm) of Example 3, everything was performed according to Example 3. A result thereof is shown in Table 1.

[Comparison Example 5]

Except that polyethylene glycol was employed instead of the PVA of Example 3, everything was performed according to Example 3. Fibers are fused in heating step, and thus carbon fibers could not be obtained.

Table 1

| | average diameter ($\mu$m) | average length ($\mu$m) | number of waviness | number of protruding portions | specific surface area ($m^2$/g) | discharge capacity (mAh/g) |
|---|---|---|---|---|---|---|
| Example 1 | 0.9 | 15 | 1.3 | 8.2 | 20.3 | 50.9 |
| Example 2 | 2.0 | 35 | 2.5 | 23.4 | 25.4 | 63.8 |
| Example 3 | 2.0 | 35 | 2.5 | 23.4 | 21.5 | 55.8 |
| Example 4 | 1.5 | 23 | 1.1 | 12.8 | 53.2 | 73.5 |
| Example 5 | 2.5 | 17 | 1.2 | 5.3 | 15.7 | 46.5 |
| Example 6 | 3.5 | 6.5 | 1.7 | 18.2 | 30.2 | 29.8 |
| Example 7 | 2.8 | 10.2 | 2.4 | 12.5 | 18.5 | 38.5 |
| Example 8 | 3.2 | 12.5 | 3.1 | 18.4 | 17.2 | 32.8 |
| Comparison Example 1 | 1.2 | 21 | 1.5 | 0.8 | 7.2 | 5.6 |
| Comparison Example 2 | 1.2 | 21 | 1.5 | 0.8 | 8.2 | 8.3 |

(continued)

|  | average diameter ($\mu$m) | average length ($\mu$m) | number of waviness | number of protruding portions | specific surface area (m$^2$/g) | discharge capacity (mAh/g) |
|---|---|---|---|---|---|---|
| Comparison Example 4 | 2.5 | 13 | 1.1 | 1.8 | 8.8 | 10.1 |

[Example 9]

60 mass pts. of PVA (Product Name: Poval 224, Degree of saponification: 88 mol%, Degree of polymerization: 2400, produced by KURARAY CO., LTD), 5 mass pts. of carbon black (Primary particle diameter: 23 nm, Iron: 1 ppm), 35 mass pts. of metal silicon (Average particle diameter: 0.8 $\mu$m, produced by KINSEI MATEC CO., LTD.), and 500 mass pts. of water were mixed by using a bead mill. Carbon black-metal silicon dispersion liquid (PVA was dissolved) could be obtained.

With the dispersion liquid, everything was performed according to Example 3.

Thus obtained carbon fibers were measured by SEM (JSM-7001F). A result thereof is shown in FIGS. 10 and 11.

Physical properties of thus obtained carbon fibers are shown in Table 2. CB was observed on the carbon fiber. A primary particle diameter of the CB was 23 nm.

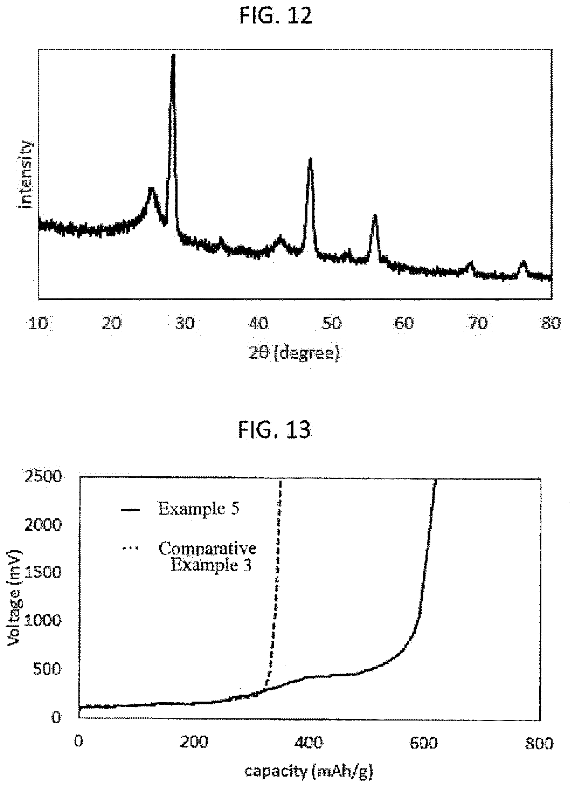

A result of X-ray diffraction measurement (XRD: manufactured by Rigaku Corporation) is shown in FIG. 12. Diffraction lines belonging to 111 surfaces (around 28°), 220 surfaces (around 47°), and 311 surfaces (around 56°), which are unique to metal silicon, were observed.

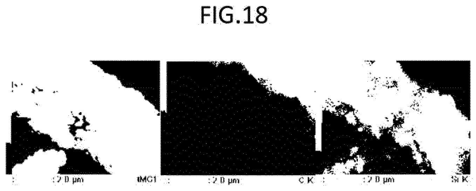

A comparison ratio between carbon and silicon was measured by JSM-7001F (produced by JEOL Ltd.). Left side of FIG. 18 is a SEM image. Middle of FIG. 18 is a carbon mapping. Right side of FIG. 18 is a silicon mapping. According to FIG. 18, carbon/silicon = 21/79 (mass ratio) was obtained. An average particle diameter of silicon particles was 0.8 $\mu$m.

10 mass pts. of the silicon containing carbon fiber, 87 mass pts. of artificial graphite, 1 mass pts. of carboxymethylcellulose, and 2 mass pts. of styrene-butadiene copolymer particles were dispersed in 400 mass pts. of water. The dispersion liquid was applied onto copper foil. After drying, the copper foil was pressed. A lithium-ion battery negative electrode could be obtained. Lithium foil (counter electrode) was employed. Ethylene carbonate/diethylene carbonate (1/1 (volume ratio): electrolysis solution) was employed. 1 mol% of LiPF$_6$ (electrolyte) was used. A coin cell of a lithium-ion battery was produced.

The coin cell was charged/discharged at constant current (charging/discharging rate: 0.1 C). A discharge capacity was measured. Thus obtained charging/discharging curve is shown in FIG. 13. A discharge capacity was 618 mAh/g. The discharge capacity after charging/discharging were repeated for 30 times was 575 mAh/g. Cycle characteristics (a ratio of a discharge capacity after 30 cycles with respect to an initial discharge capacity) was 93%. A result thereof is shown in Table 2.

[Comparison Example 6]

Except that artificial graphite was used by 97 mass pts. without using the silicon containing carbon fiber of Example 9, everything was performed according to Example 9. A result thereof is shown in Table 2.

[Example 10]

60 mass pts. of PVA (Product Name: Poval 224, Degree of saponification: 88 mol%, Degree of polymerization: 2400, produced by KURARAY CO., LTD), 30 mass pts. of carbon black (Primary particle diameter: 35 nm, Iron: 1 ppm), 10 mass pts. of metal silicon (Average particle diameter: 0.3 $\mu$m, produced by KINSEI MATEC CO., LTD.), and 500 mass pts. of water were mixed by using a bead mill. Carbon black-metal silicon dispersion liquid (PVA was dissolved) was obtained. With the dispersion liquid, everything was performed according to Example 9. A result thereof is shown in Table 2. An average particle diameter of silicon particles was 0.3 $\mu$m. CB was observed on thus obtained carbon fiber. A primary particle diameter of the CB was 35 nm.

[Example 11]

60 mass pts. of PVA (Product Name: Poval 224, Degree of saponification: 88 mol%, Degree of polymerization: 2400, produced by KURARAY CO., LTD), 1 mass pts. of carbon black (Primary particle diameter: 35 nm, Iron: 10 ppm), 39 mass pts. of metal silicon (Average particle diameter: 0.9 $\mu$m, produced by KINSEI MATEC CO., LTD.), and 500 mass pts. of water were mixed by using a bead mill. Carbon black-metal silicon dispersion liquid (PVA was dissolved) could be obtained. With the dispersion liquid, everything was performed according to Example 9. A result thereof is shown in Table 2. An average particle diameter of silicon particles was 0.9 $\mu$m. CB was observed on thus obtained carbon fiber. A primary particle diameter of the CB was 35 nm.

[Example 12]

The dispersion liquid of Example 9 was employed. A spinning and drawing device (see, FIG. 3) was utilized. Spinning was performed (Draw ratio: three times, Number of filaments: 18, 40 deci Tex).

Thus obtained yarn was heated (at a temperature of 300 °C for one hour in nitrogen).

Subsequently, heating (at a temperature of 800 °C in nitrogen) was performed.

Further subsequently, the yarn was subjected to treatment by a mixer. Accordingly, unraveling was performed. More specifically, fibers (carbon fibers) could be obtained.

Thus obtained carbon fibers were classified. A sieve (aperture: 75 $\mu$m) was utilized for the classification. A result thereof is shown in Table 2. An average particle diameter of silicon particles was 0.8 $\mu$m. CB was observed on thus obtained carbon fiber. A primary particle diameter of the CB was 23 nm.

Table 2

| | Example 9 | Example 10 | Example 11 | Example 12 | Comparison Example 6 |
|---|---|---|---|---|---|
| average diameter ($\mu$m) | 3.2 | 0.6 | 5.2 | 6.2 | - |
| average length ($\mu$m) | 25 | 5 | 45 | 60 | - |
| number of waviness | 3.0 | 4.2 | 1.8 | 3.0 | - |
| number of protruding portions | 12.3 | 23.4 | 8.2 | 15.2 | - |
| carbon/silicon (wt%) | 21/79 | 80/20 | 7/93 | 17/83 | - |
| discharge capacity (mAh/g) | 618 | 411 | 658 | 820 | 360 |
| cycle characteristics (%) | 93 | 95 | 85 | 88 | 71 |
| *An average diameter, an average length, the number of waviness, the number of protruding portions are identical to those of Example 1. | | | | | |

When a comparison is made between Comparison Example 6 and Examples 9, 10, and 11, it is found that a discharge capacity increases and cycle characteristics improves in the cells of the present Examples.

[Example 13]

60 mass pts. of PVA (Product Name: Poval 224, Degree of saponification: 88 mol%, Degree of polymerization: 2400, produced by KURARAY CO., LTD), 5 mass pts. of carbon black (Primary particle diameter: 23 nm, Iron: 1 ppm), 35 mass pts. of sulfur (Average particle diameter: 2$\mu$m, produced by Kishida Chemical Co., Ltd.), and 500 mass pts. of water were mixed by using a bead mill. Carbon black-sulfur dispersion liquid (PVA was dissolved) could be obtained. With the dispersion liquid, everything was performed according to Example 9.

A result thereof is shown in Table 3.

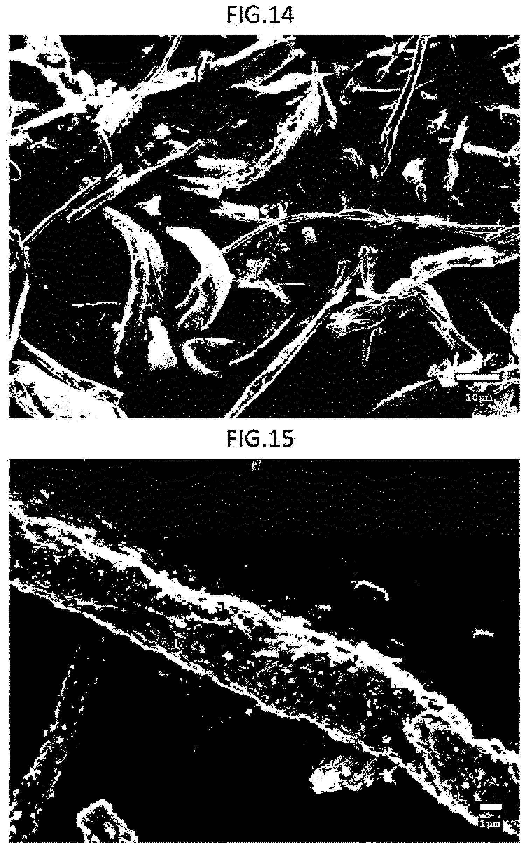

Thus obtained carbon fibers were measured by SEM (JSM-7001F). A result thereof is shown in FIGS. 14 and 15. CB was observed on thus obtained carbon fiber. A primary particle diameter of the CB was 23 nm.

The carbon fibers were measured by SEM-EDS (JSM-7001F). Carbon/sulfur = 17/83 (mass ratio) was obtained. An average particle diameter of sulfur particles was 2 $\mu$m.

98 mass pts. of the sulfur containing carbon fiber and 2 mass pts. of polyvinylidene fluoride were dispersed in 200 mass pts. of N-methyl-pyrrolidone. The dispersion liquid was applied onto A1 foil. After drying, the A1 foil was pressed. Accordingly, a lithium-ion battery negative electrode could be obtained. A lithium foil (counter electrode) was used. Ethylene carbonate/diethylene carbonate (1/1 (volume ratio): electrolysis solution) was used. 1 mol% of $LiPF_6$ (electrolyte) was used. A coin cell of a lithium-ion battery was produced.

The coin cell was charged/discharged at constant current (charging/discharging rate: 0.1 C). A discharge capacity was measured. Thus obtained charging/discharging curve is shown in FIG. 16. The discharge capacity was 237.3 mAh/g. A discharge capacity after charging/discharging was repeated for 10 times was 206.5 mAh/g. Cycle characteristics (a ratio of discharge capacity after 10 cycles with respect to an initial discharge capacity) was 87%. A result thereof is shown in Table 3.

[Example 14]

60 mass pts. of PVA (Product Name: Poval 224, Degree of saponification: 88 mol%, Degree of polymerization: 2400, produced by KURARAY CO., LTD), 30 mass pts. of carbon black (Primary particle diameter: 35 nm, Iron: 1 ppm), 10 mass pts. of sulfur (Average particle diameter: 0.3 $\mu$m, produced by Kishida Chemical Co., Ltd.), and 500 mass pts. of water were mixed by using a bead mill. Carbon black-sulfur dispersion liquid (PVA was dissolved) could be obtained. With the dispersion liquid, everything was performed according to Example 12. A result thereof is shown in Table 3. An average particle diameter of sulfur particles was 0.3 $\mu$m. CB was observed on thus obtained carbon fiber. A primary particle diameter of the CB was 35 nm.

[Example 15]

60 mass pts. of PVA (Product Name: Poval 224, Degree of saponification: 88 mol%, Degree of polymerization: 2400, produced by KURARAY CO., LTD), 1 mass pts. of carbon black (Primary particle diameter: 35 nm, Iron: 1 ppm), 39 mass pts. of sulfur (Average particle diameter: 0.8 $\mu$m, produced by Kishida Chemical Co., Ltd.), and 500 mass pts. of water were mixed by using a bead mill. Carbon black-sulfur dispersion liquid (PVA was dissolved) could be obtained. With the dispersion liquid, everything was performed according to Example 12. A result thereof is shown in Table 3. An average particle diameter of sulfur particles was 0.8 $\mu$m. CB was observed on thus obtained carbon fiber. A primary particle diameter of the CB was 35 nm.

[Comparison Example 7]

5 mass pts. of carbon black (Primary particle diameter: 35 nm, Iron: 1 ppm), 35 mass pts. of sulfur (Average particle diameter: 2$\mu$m, produced by Kishida Chemical Co., Ltd.), 1 mass pts. of polyvinylidene fluoride, and 200 mass pts. of N-methyl-pyrrolidone were mixed. Carbon black-sulfur dispersion liquid was produced. With the dispersion liquid, everything was performed according to Example 12. A result thereof is shown in Table 3.

Table 3

| | Example 13 | Example 14 | Example 15 | Comparison Example 7 |
|---|---|---|---|---|
| average diameter ($\mu$m) | 4.8 | 2.1 | 5.3 | - |
| average length ($\mu$m) | 32 | 8.4 | 46 | - |
| number of waviness | 1.2 | 3.5 | 2.5 | - |
| number of protruding portions | 5.3 | 10.2 | 8.5 | - |
| carbon/sulfur (wt%) | 17/83 | 80/20 | 7/93 | - |
| discharge capacity (mAh/g) | 237.3 | 60.3 | 253.2 | 27.8 |
| cycle characteristics (%) | 87 | 91 | 85 | 17 |
| *An average diameter, an average length, the number of waviness, the number of protruding portions are identical to those of Example 1. | | | | |

When a comparison is made between Comparison Example 7 and Examples 13, 14, and 15, it is found that a discharge capacity increases and cycle characteristics improve in the cells of the present Examples.

[REFERENCE CHARACTER LIST]

1    spinning body (plate)

3    collection plate

4    nonwoven fabric

5    waviness

6    protruding portion

**Claims**

1. A carbon fiber that satisfies the following [Requirement 1] to [Requirement 4]:

   [Requirement 1]

   a diameter of the carbon fiber: 0.5-6.5 μm,
   a length of the carbon fiber: 5-65 μm, and
   the diameter of the carbon fiber is less than the length of the carbon fiber;

   [Requirement 2]
   the carbon fiber has waviness, wherein the waviness is defined as a bending portion having a radius of curvature of 1-100 μm and a height of 2-50 μm observed in a scanning electron microscope image;
   [Requirement 3]

   the carbon fiber has protruding portions,
   protruding height of the protruding portions: 20-300 nm,
   number of the protruding portions: 3-25 per 1 μm in length along the carbon fiber; and

   [Requirement 4],
   the carbon fiber contains carbon black.

2. A carbon fiber according to claim 1, wherein the carbon fiber further satisfies the following [Requirement 5]:
   [Requirement 5]

   the carbon fiber contains Si particles, and
   [mass of the Si particles]/[mass of the carbon black + mass of the Si particles] = 20-94% is satisfied.

3. A carbon fiber according to claim 1, wherein the carbon fiber further satisfies the following [Requirement 6]:
   [Requirement 6]

   the carbon fiber contains S particles, and
   [mass of the S particles]/[mass of the carbon black + mass of the S particles] = 20-94% is satisfied.

4. A method of producing a carbon fiber material:

   wherein the method comprises a dispersion liquid preparation step, a spinning step, a denaturation step, an unraveling step, and a classifying step;
   wherein the dispersion liquid preparation step is a step of preparing dispersion liquid which contains polyvinyl alcohol, carbon black having a primary particle diameter of 21-69 nm, and a solvent;
   wherein the spinning step is a step of producing a fiber material containing a carbon fiber precursor from the dispersion liquid;
   wherein the denaturation step is a step of modifying the carbon fiber precursor to a carbon fiber;
   wherein the unraveling step is a step of unraveling the fiber material; and
   wherein the classifying step is a step of separating carbon fibers having a diameter of 0.5-6.5 μm and a length of 5-65 μm.

5. A method of producing a carbon fiber material according to claim 4, wherein the carbon black is 5-200 mass pts. with respect to 100 mass pts. of the polyvinyl alcohol.

6. A method of producing a carbon fiber material according to claim 4 or claim 5, wherein the polyvinyl alcohol has

a degree of polymerization of 2200-4000, and
a degree of saponification of 75-90 mol%.

7. A method of producing a carbon fiber material according to any one of claims 4 to 6:

wherein the dispersion liquid preparation step is a step of producing dispersion liquid by further using Si particles or S particles;
wherein the Si particles or S particles have a particle diameter of a range between 0.05 and 3 $\mu$m; and
wherein [mass of the Si particles or S particles]/[mass of the carbon black + mass of the Si particles or S particles] = 20-94 % is satisfied.

8. A method of producing a carbon fiber material according to any one of claims 4 to 7, wherein the spinning is spinning and drawing.

9. A method of producing a carbon fiber material according to any one of claims 4 to 7, wherein the spinning is centrifugal spinning.

10. A method of producing a carbon fiber material according to any one of claims 4 to 7, wherein the spinning is electrospinning.

11. A product comprising:

a carbon fiber,
wherein the carbon fiber is the carbon fiber according to any one of claims 1 to 3.

12. An electrical device comprising the carbon fiber according to any one of claims 1 to 3.

13. A secondary battery comprising a negative electrode that is made by using the carbon fiber according to any one of claims 1 to 3.

14. A secondary battery comprising a positive electrode that is made by using the carbon fiber according to any one of claims 1 to 3.


**Patentansprüche**

1. Kohlenstofffaser, die folgenden Anforderungen, [Anforderung 1] bis [Anforderung 4], erfüllt:

[Anforderung 1]

ein Durchmesser der Kohlenstofffaser: 0,5 - 6,5 $\mu$m;
eine Länge der Kohlenstofffaser: 5 - 65 $\mu$m; und
der Durchmesser der Kohlenstofffaser ist kleiner als die Länge der Kohlenstofffaser;

[Anforderung 2]
die Kohlenstofffaser hat eine Welligkeit, wobei die Welligkeit als ein Biegungsabschnitt mit einem Krümmungsradius von 1 - 100 $\mu$m und einer Höhe von 2 - 50 $\mu$m definiert ist, beobachtet in einem Rasterelektronenmikroskopbild;
[Anforderung 3]

die Kohlenstofffaser hat hervorstehende Abschnitte;
Vorsprunghöhe der hervorstehenden Abschnitte: 20 - 300 nm;
Anzahl der hervorstehenden Abschnitte: 3 - 25 pro 1 $\mu$m Länge entlang der Kohlenstofffaser; und

[Anforderung 4]
die Kohlenstofffaser enthält Ruß.

2. Kohlenstofffaser nach Anspruch 1, wobei die Kohlenstofffaser ferner die folgende [Anforderung 5] erfüllt:

[Anforderung 5]

die Kohlenstofffaser enthält Si-Partikel; und
[Masse der Si-Partikel]/[Masse des Rußes + Masse der Si-Partikel] = 20 - 94% ist erfüllt.

3. Kohlenstofffaser nach Anspruch 1, wobei die Kohlenstofffaser ferner die folgende [Anforderung 6] erfüllt:
[Anforderung 6]

die Kohlenstofffaser enthält S-Partikel; und
[Masse der S-Partikel]/[Masse des Rußes + Masse der S-Partikel] = 20 - 94% ist erfüllt.

4. Verfahren zum Herstellen eines Kohlenstofffasermaterials,

wobei das Verfahren einen Dispersionsflüssigkeitsherstellungsschritt, einen Spinnschritt, einen Denaturierungsschritt, einen Entwirrungsschritt und einen Klassifizierungsschritt aufweist,
wobei der Dispersionsflüssigkeitsherstellungsschritt ein Schritt zum Herstellen einer Dispersionsflüssigkeit ist, die Polyvinylalkohol, Ruß mit einem Primärpartikeldurchmesser von 21 bis 69 nm und ein Lösungsmittel enthält,
wobei der Spinnschritt ein Schritt zum Herstellen eines Fasermaterials, das einen Kohlenstofffaservorläufer enthält, aus der Dispersionsflüssigkeit ist,
wobei der Denaturierungsschritt ein Schritt zum Modifizieren des Kohlenstofffaservorläufers zu einer Kohlenstofffaser ist,
wobei der Entwirrungsschritt ein Schritt zum Entwirren des Fasermaterials ist, und
wobei der Klassifizierungsschritt ein Schritt zum Separieren von Kohlenstofffasern mit einem Durchmesser von 0,5 - 6,5 $\mu$m und einer Länge von 5 - 65 $\mu$m ist.

5. Verfahren nach Anspruch 4, wobei der Rußanteil 5 bis 200 Masseteile pro 100 Masseteile des Polyvinylalkohols beträgt.

6. Verfahren nach Anspruch 4 oder 5, wobei der Polyvinylalkohol

einen Polymerisationsgrad von 2200 - 4000 und
einen Verseifungsgrad von 75 - 90 Mol-% aufweist.

7. Verfahren nach einem der Ansprüche 4 bis 6,

wobei der Dispersionsflüssigkeitsherstellungsschritt ein Schritt zum Herstellen einer Dispersionsflüssigkeit ist, in dem ferner Si-Partikel oder S-Partikel verwendet werden,
wobei die Si-Partikel oder S-Partikel einen Partikeldurchmesser in einem Bereich zwischen 0,05 und 3 $\mu$m aufweisen, und
wobei [Masse der Si-Partikel oder S-Partikel]/[Masse des Rußes + Masse der Si-Partikel oder S-Partikel] = 20 - 94% erfüllt ist.

8. Verfahren nach einem der Ansprüche 4 bis 7, wobei der Spinnvorgang ein Spinn- und Streckvorgang ist.

9. Verfahren nach einem der Ansprüche 4 bis 7, wobei der Spinnvorgang ein Zentrifugalspinnvorgang ist.

10. Verfahren nach einem der Ansprüche 4 bis 7, wobei der Spinnvorgang ein Elektrospinnvorgang ist.

11. Produkt mit:

einer Kohlenstofffaser,
wobei die Kohlenstofffaser die Kohlenstofffaser nach einem der Ansprüche 1 bis 3 ist.

12. Elektrisches Bauelement mit der Kohlenstofffaser nach einem der Ansprüche 1 bis 3.

13. Sekundärbatterie mit einer negativen Elektrode, die unter Verwendung der Kohlenstofffaser nach einem der Ansprüche 1 bis 3 hergestellt ist.

**14.** Sekundärbatterie mit einer positiven Elektrode, die unter Verwendung der Kohlenstofffaser nach einem der Ansprüche 1 bis 3 hergestellt ist.

**Revendications**

**1.** Fibre de carbone qui satisfait les exigences [Exigence 1] à [Exigence 4] :

[Exigence 1]

diamètre de la fibre de carbone : 0,5 - 6,5 $\mu$m,
longueur de la fibre de carbone : 5 - 65 $\mu$m, et
le diamètre de la fibre de carbone est inférieur à la longueur de la fibre de carbone ;

[Exigence 2]
la fibre de carbone présente une ondulation, l'ondulation étant définie comme une portion de flexion ayant un rayon de courbure de 1 à 100 $\mu$m et une hauteur de 2 à 50 $\mu$m observée dans une image de microscope électronique à balayage ;
[Exigence 3]

la fibre de carbone comprend des portions en saillie,
hauteur de saillie des portions en saillie : 20 à 300 nm,
nombre de portions en saillie : 3 à 25 pour 1 $\mu$m de longueur le long de la fibre de carbone ; et

[Exigence 4]
la fibre de carbone contient du noir de carbone.

**2.** Fibre de carbone selon la revendication 1, dans laquelle la fibre de carbone satisfait en outre l'exigence [Exigence 5] suivante :
[Exigence 5]

la fibre de carbone contient des particules de Si, et
[masse des particules de Si] / [masse du noir de carbone + masse des particules de Si] = 20 à 94 % est satisfaite.

**3.** Fibre de carbone selon la revendication 1, dans laquelle la fibre de carbone satisfait en outre l'exigence [Exigence 6] suivante :
[Exigence 6]

la fibre de carbone contient des particules de S, et
[masse des particules de S] / [masse du noir de carbone + masse des particules de S] = 20 à 94 % est satisfaite.

**4.** Procédé de production d'un matériau de type fibres de carbone :

dans lequel le procédé comprend une étape de préparation de liquide de dispersion, une étape de filature, une étape de dénaturation, une étape d'effilochage et une étape de classification ;
l'étape de préparation de liquide de dispersion étant une étape de préparation de liquide de dispersion qui contient un alcool polyvinylique, un noir de carbone présentant un diamètre de particules primaire de 21 à 69 nm, et un solvant ;
dans lequel l'étape de filature étant une étape de production d'un matériau fibreux contenant un précurseur de fibre de carbone à partir du liquide de dispersion ;
dans lequel l'étape de dénaturation étant une étape de transformation du précurseur de fibre de carbone en une fibre de carbone ;
dans lequel l'étape d'effilochage étant une étape d'effilochage du matériau fibreux ; et
dans lequel l'étape de classification étant une étape de séparation des fibres de carbone ayant un diamètre de 0,5 à 6,5 $\mu$m et une longueur de 5 à 65 $\mu$m.

**5.** Procédé de production d'un matériau de type fibre de carbone selon la revendication 4, dans lequel le noir de carbone est de 5 à 200 points de masse par rapport à 100 points de masse de l'alcool polyvinylique.

**6.** Procédé de production d'un matériau de type fibre de carbone selon la revendication 4 ou la revendication 5, dans lequel l'alcool polyvinylique présente

un degré de polymérisation de 2200 à 4000, et
un degré de saponification de 75 à 90 % en mole.

**7.** Procédé de production d'un matériau de type fibre de carbone selon l'une des revendications 4 à 6 :

dans lequel l'étape de préparation de liquide de dispersion est une étape de production d'un liquide de dispersion en utilisant en outre des particules de Si ou des particules de S ;
dans lequel les particules de Si ou les particules de S présentent un diamètre de particule dans une plage entre 0,05 et 3 $\mu$m ; et
dans lequel [masse des particules de Si ou les particules de S] / [masse du noir de carbone + masse des particules de Si ou les particules de S] = 20 à 94 % est satisfaite.

**8.** Procédé de production d'un matériau de type fibre de carbone selon l'une des revendications 4 à 7, dans lequel la filature est une filature et un étirement.

**9.** Procédé de production d'un matériau de type fibre de carbone selon l'une des revendications 4 à 7, dans lequel la filature est une filature centrifuge.

**10.** Procédé de production d'un matériau de type fibre de carbone selon l'une des revendications 4 à 7, dans lequel la filature est une filature électrique.

**11.** Produit comprenant :

une fibre de carbone,
dans lequel la fibre de carbone étant la fibre de carbone selon l'une des revendications 1 à 3.

**12.** Dispositif électrique comprenant la fibre de carbone selon l'une des revendications 1 à 3.

**13.** Une batterie secondaire comprenant une électrode négative qui est réalisée à l'aide de la fibre de carbone selon l'une des revendications 1 à 3.

**14.** Une batterie secondaire comprenant une électrode positive qui est réalisée à l'aide de la fibre de carbone selon l'une des revendications 1 à 3.

## FIG. 1

## FIG. 2

## FIG. 3

FIG. 4

FIG. 5

FIG. 6

FIG. 7

FIG. 8

FIG. 9

## FIG. 10

## FIG. 11

FIG. 12

FIG. 13

FIG.14

FIG.15

## FIG.16

## FIG.17

FIG.18

## REFERENCES CITED IN THE DESCRIPTION

**Patent documents cited in the description**

- WO 4697901 A
- WO 5334278 A
- WO 5510970 A
- WO 5376530 A
- WO 2014160174 A1

- JP 4697901 B
- JP 5510970 B
- JP 5376530 B
- EP 415856 A